(19) Europäisches Patentamt

European Patent Office

Office européen des brevets

(11) EP 0 951 010 B1

(12) FASCICULE DE BREVET EUROPEEN

(45) Date de publication et mention
de la délivrance du brevet:
**26.10.2005 Bulletin 2005/43**

(51) Int Cl.⁷: **G11B 5/31**

(21) Numéro de dépôt: **99400268.1**

(22) Date de dépôt: **05.02.1999**

(54) **Procédé de réalisation d'un ensemble à plusieurs têtes magnétiques et ensemble à têtes multiples obtenu par ce procédé**

Verfahren zur Herstellung einer Anordnung mit mehreren Magnetköpfen und so hergestellte Anordnung mit mehreren Köpfen

Process for manufacturing an assembly with multiple magnetic heads and assembly with multiple heads obtained by this process

(84) Etats contractants désignés:
**DE GB IT**

(30) Priorité: **11.02.1998 FR 9801617**

(43) Date de publication de la demande:
**20.10.1999 Bulletin 1999/42**

(73) Titulaire: **COMMISSARIAT A L'ENERGIE ATOMIQUE**
**75015 Paris Cédex 15 (FR)**

(72) Inventeurs:
 • **Gaud, Pierre**
  **38500 Coublevie (FR)**
 • **Albertini, Jean-Baptiste**
  **38100 Grenoble (FR)**
 • **Sibuet, Henri**
  **38120 Le Fontanil (FR)**

(74) Mandataire: **Poulin, Gérard et al**
**Société BREVATOME**
**3, rue du Docteur Lancereaux**
**75008 Paris (FR)**

(56) Documents cités:
**FR-A- 2 747 226      GB-A- 2 299 441**

 • **PATENT ABSTRACTS OF JAPAN vol. 018, no. 172 (P-1715), 23 mars 1994 & JP 05 334627 A (MITSUBISHI ELECTRIC CORP), 17 décembre 1993**
 • **PATENT ABSTRACTS OF JAPAN vol. 018, no. 685 (P-1848), 22 décembre 1994 & JP 06 267024 A (MITSUBISHI ELECTRIC CORP), 22 septembre 1994**

## Description

### Domaine technique

La présente invention a pour objet un procédé de réalisation d'un ensemble à plusieurs têtes magnétiques et un ensemble à têtes multiples obtenu par ce procédé.

Elle trouve une application privilégiée dans l'enregistrement vidéo grand public, mais elle peut être utilisée aussi dans d'autres domaines, comme celui des sauvegardes de données ou celui des mémoires d'ordinateur.

### Etat de la technique antérieure

Un support d'enregistrement magnétique pour enregistrement vidéo, sauvegarde de données ou mémoire d'ordinateur, comprend des nombreuses pistes sur lesquelles sont inscrites des informations sous forme de domaines magnétiques.

Pour augmenter la densité d'informations, on augmente non seulement le nombre d'informations par unité de longueur, mais encore le nombre de pistes. Pour cela, on diminue la largeur des pistes, et, simultanément, l'intervalle les séparant, jusqu'à rendre les pistes jointives.

Pour éviter tout problème de diaphonie à la lecture, les informations sont écrites sur deux pistes adjacentes, de manière inclinée, avec des angles d'inclinaison opposés. Ces angles d'inclinaison sont appelés angles d'azimut. L'entrefer de la tête de lecture doit alors présenter un azimut dont la valeur correspond à l'inclinaison de l'enregistrement.

La figure 1 annexée montre ainsi un support d'enregistrement avec deux pistes 10a et 10b dont les directions d'écriture, fixées par l'entrefer et représentées par des traits obliques, font, avec la normale à la direction générale des pistes, des angles d'azimut +i pour la piste 10a et -i pour la piste 10b.

La figure 2 annexée montre deux têtes magnétiques 12a, 12b avec des entrefers 14a, 14b présentant des angles d'azimut respectivement égaux à +i et -i. La direction de déplacement de ces têtes est marquée D.

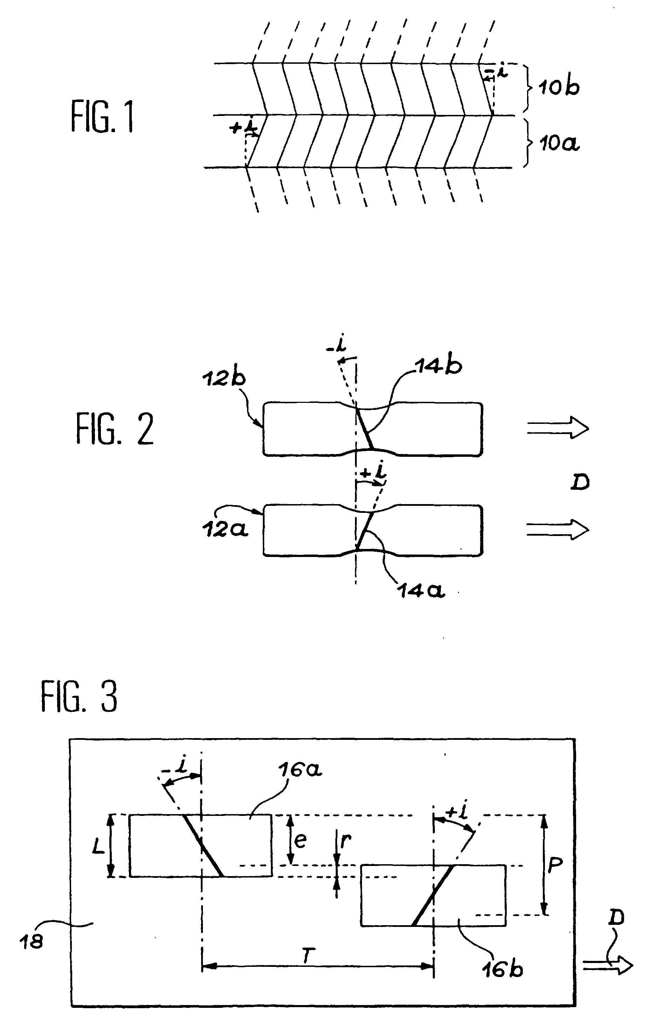

En réalité, un ensemble à deux têtes azimutées dans des sens opposés ne se présente généralement pas sous la forme de deux têtes juxtaposées comme sur la figure 2, sinon les pistes lues ne seraient pas jointives. Il se présente sous la forme de deux têtes décalées longitudinalement l'une par rapport à l'autre, comme illustré sur la figure 3. Ce montage permet, en effet, de resserrer les pistes. Dans ce montage, les deux têtes 16a, 16b présentent chacune un entrefer azimuté de largeur totale L, les deux entrefers étant séparés par une distance T. Chaque tête peut alors survoler une piste d'enregistrement, de largeur e, ces pistes étant quasi-jointives. Le recouvrement des têtes est noté r.

Pour avoir des pistes jointives inscrites avec des azimuts opposés et de même largeur, il est nécessaire que la période d'enregistrement P, c'est-à-dire la distance entre deux pistes enregistrées avec le même azimut, soit reliée à L, r et e par la relation :

$$P=2(L-r)=2e \text{ ou encore } r=L-P/2=L-e.$$

Par exemple, pour P=10 μm, on a e=5 μm pour L=6 μm et r=1 μm. On peut bien entendu choisir L=e et r=0.

Dans le cas de têtes ayant des largeurs de pôles différentes, respectivement L1 et L2, la période d'enregistrement est égale à : P=L1+L2-r-r' où L1 est la largeur de pôle de la tête 1, L2 la largeur de pôle de la tête 2, et où r' est le recouvrement dû aux paramètres du système.

En jouant sur r et r', on peut retrouver deux pistes écrites de même largeur, même si les têtes ont des largeurs de pôle différentes. Le fait d'avoir des têtes avec des largeurs de pôle différentes peut être intéressant pour plusieurs raisons, soit comme paramètre d'ajustage des réluctances des deux têtes (pour avoir des efficacités comparables), soit pour déserrer une tolérance sur l'une des deux têtes.

Les deux têtes magnétiques 16a, 16b comprennent encore des moyens non représentés, comme un circuit magnétique de fermeture du flux, qui relie une pièce polaire à l'autre et un bobinage conducteur magnétiquement couplé au circuit magnétique. L'ensemble de tous ces moyens forme une tête double à azimuts opposés, qui porte la référence générale 18 sur la figure 3. Son sens de déplacement est encore symbolisé par la flèche D.

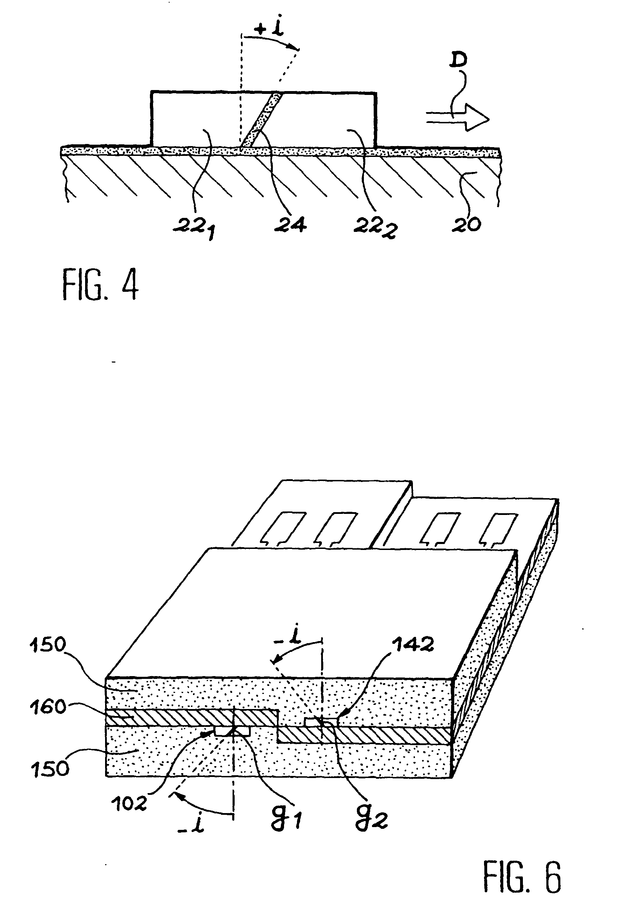

Pour obtenir une telle tête double, on réalise généralement deux têtes indépendantes ayant des entrefers inclinés dans des sens opposés et l'on monte ces deux têtes sur un support unique. Une tête magnétique à azimut est représentée à titre d'exemple sur la figure 4 (en coupe). On y voit un substrat monocristallin 20, deux pièces polaires $22_1$, $22_2$ séparées par un entrefer amagnétique 24, lequel est incliné d'un angle i. Cette inclinaison est obtenue par exemple en tirant profit du caractère monocristallin du substrat et en réalisant une gravure anisotrope selon un plan cristallographique du substrat. Ce procédé est décrit dans le document FR-A-2 664 729 (ou WO-92/02015).

Ce procédé de réalisation de têtes doubles, consistant à regrouper deux têtes simples, ne donne pas entière satisfaction. En effet, il est difficile d'orienter correctement les deux têtes pour que leurs entrefers présentent bien chacune les azimuts souhaités et il est également difficile de placer correctement les deux têtes l'une par rapport à l'autre, pour que chacune d'elles coopèrent correctement avec des pistes. Les dimensions données à propos de la figure 3, en particulier la largeur de 6,7 microns, montrent, en effet, qu'il s'agit là de réglages extrêmement fins.

Le document FR-A-2 747 226 décrit un autre procédé de réalisation d'un ensemble à deux têtes magnétiques à azimuts opposés. L'une des variantes de ce procédé est illustrée sur les figures 5 et 6.

Sur la figure 5, tout d'abord, on voit une barrette A avec une première tête, de référence générale 100, avec un ensemble 102 comprenant un circuit magnétique avec un entrefer azimuté et un bobinage conducteur et deux plots de contact $104_1$, $104_2$. A côté de cette tête, se trouve un premier logement gravé 120.

Sur une contre-barrette B, on trouve les mêmes moyens, à savoir une seconde tête, de référence générale 130, avec un ensemble 132 comprenant un circuit magnétique avec un entrefer azimuté identique à l'entrefer de la première tête 102, un bobinage conducteur et des plots de contact $134_1$, $134_2$. A côté de la seconde tête 130 se trouve un second logement 140.

En retournant la contre-barrette B sur la barrette A, on emboîte la première tête 100 dans le second logement 140 et la seconde tête 132 dans le premier logement 120. On solidarise ensuite l'ensemble obtenu. Le résultat est schématiquement illustré sur la figure 6. On y voit la première tête 102 avec son entrefer azimuté gl, disposée sur un substrat 150 et recouverte d'une couche isolante 160 et une seconde tête 142 avec son entrefer g2 azimuté dans une direction opposée, avec son substrat 150 retourné et sa couche isolante 160. Les deux pièces sont encastrées l'une dans l'autre. Comme elles sont complémentaires l'une de l'autre, elles forment une tête monobloc.

Bien que satisfaisant à bien des égards, ce procédé présente certains inconvénients : il semble en effet mieux adapté à un assemblage par barrettes qu'à un procédé entièrement collectif. En effet, il est difficile, sur une plaque entière, de maîtriser des gravures de plusieurs dizaines de microns (pour l'encastrement d'une tête dans l'autre) sur un empilement déjà très complexe et avec une tolérance inférieure au micron. Par ailleurs, la connexion électrique entre les deux têtes est un point délicat. La jonction des deux têtes dans la partie verticale risque de ne pas être parfaite, d'où un encrassement possible. Enfin, le coût d'une tête double de ce type par rapport à une tête simple est au moins multiplié par 4.

Le but de la présente invention est justement de remédier à ces inconvénients. De plus, l'invention permet d'obtenir non seulement des têtes doubles, mais plus généralement des têtes multiples.

**Exposé de l'invention**

A cette fin, l'invention propose les procédés définis aux revendications 1, 22 et 23 dans lesquels on opère encore par retournement d'une pièce sur une autre, mais où les bobinages sont réalisés après retournement et non avant, ce qui supprime le problème de reprise de contact. De plus, on évite la gravure profonde de logements dans les substrats, ce qui simplifie la technologie et élimine la partie verticale de l'ensemble où le joint de colle posait des problèmes. Enfin, en employant une technologie commune à deux sous-ensembles, le coût de fabrication se trouve fortement diminué.

Les éléments magnétiques du premier et du deuxième substrats ne sont pas forcément en contact direct. Il peut y avoir une couche isolante entre ces éléments, mais qui doit être suffisamment fine (par exemple inférieure à 1 µm) pour assurer la continuité magnétique. Cette couche isolante peut être utile dans certaines applications car elle permet un découplage magnétique entre les différents éléments et une réduction des effets dus aux courants de Foucault.

De même, lorsque l'on amincit le deuxième substrat, il peut subsister une couche mince isolante audessus des deuxièmes pièces polaires et des plots de raccordement magnétique. Cette couche isolante peut être conservée dans le reste du procédé lorsque l'on cherche à réduire les effets dus aux courants de Foucault. Si cette couche est isolante électriquement, elle est, bien entendu, gravée aux endroits de raccords électriques, et si elle n'est pas isolante électriquement, c'est-à-dire si elle est conductrice, elle doit être gravée au voisinage du bobinage pour éviter des courts-circuits.

A titre d'exemple pour la réalisation de cet ensemble, on peut utiliser un substrat de type SOI ("Silicium-On-Insulator") complété ou non par une épitaxie, l'amincissement étant alors réalisé jusqu'à la couche d'isolant enterrée, les éléments magnétiques étant réalisés dans le film mince semi-conducteur, par exemple en silicium.

Selon un mode de réalisation, le moyen d'écriture est un bobinage conducteur. Selon une première variante, le moyen de lecture est également un bobinage conducteur. Selon une deuxième variante, le moyen de lecture est une magnétorésistance. Cette magnétorésistance est réalisée de façon à être soit à l'arrière des pièces polaires, soit dans le circuit magnétique, c'est-à-dire dans la pièce magnétique arrière ou dans les jambes magnétiques du circuit. Bien entendu, des liaisons électriques assurent l'alimentation de la magnétorésistance.

Pour former le premier et le deuxième circuits magnétiques, ainsi que le premier et le deuxième bobinages conducteurs lorsque ces bobinages existent, on peut s'inspirer de la technique décrite dans le document FR-A-2 747 226 déjà cité en formant successivement des nappes inférieures de conducteurs, des pièces magnétiques de fermeture des circuits magnétiques et des nappes supérieures de conducteurs enjambant lesdites pièces magnétiques, les nappes supérieures étant raccordées aux nappes inférieures par un moyen quelconque, par exemple au moyen de plots conducteurs de raccordement.

Si l'on ne forme qu'un sous-ensemble sur chacun des substrats, on obtiendra un ensemble à deux têtes magnétiques. Si l'on forme deux sous-ensembles sur chaque substrat on obtiendra un ensemble à quatre têtes, etc... De manière générale, on peut utiliser un nombre quelconque n de substrats comprenant chacun un nombre quelconque p de sous-ensembles, pour obtenir un ensemble à np têtes.

La présente invention a également pour objet un ensemble à têtes multiples tel que défini à la revendication 24.

**Brève description des dessins**

- la figure 1, déjà décrite, montre deux pistes adjacentes d'enregistrement ;
- la figure 2, déjà décrite, montre deux têtes à azimuts opposés ;
- la figure 3, déjà décrite, montre un ensemble à deux têtes décalées ;
- la figure 4, déjà décrite, montre un détail d'une tête connue à entrefer azimuté ;
- la figure 5, déjà décrite, montre, en vue de dessus, les têtes, connexions, plots de contact et gravures d'une barrette et d'une contre-barrette selon un procédé connu ;
- la figure 6, déjà décrite, montre un ensemble connu à double tête ;

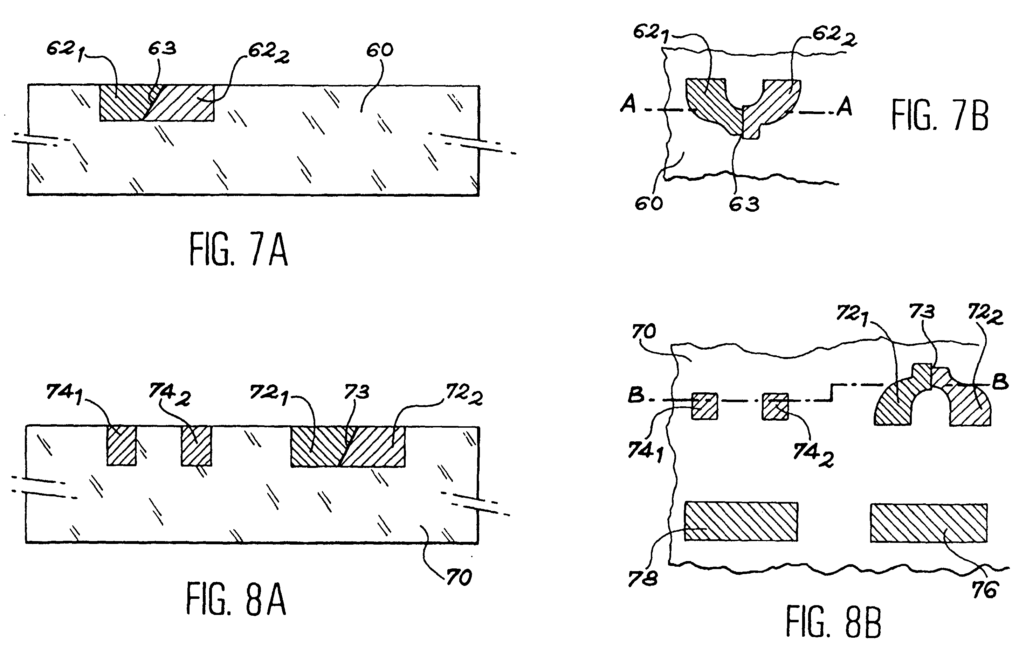

- les figures 7A et 7B montrent, en section droite et en vue de dessus, un premier sous-ensemble, selon une variante de l'invention ;
- les figures 8A et 8B montrent, en section droite et en vue de dessus, un deuxième sous-ensemble selon l'invention ;

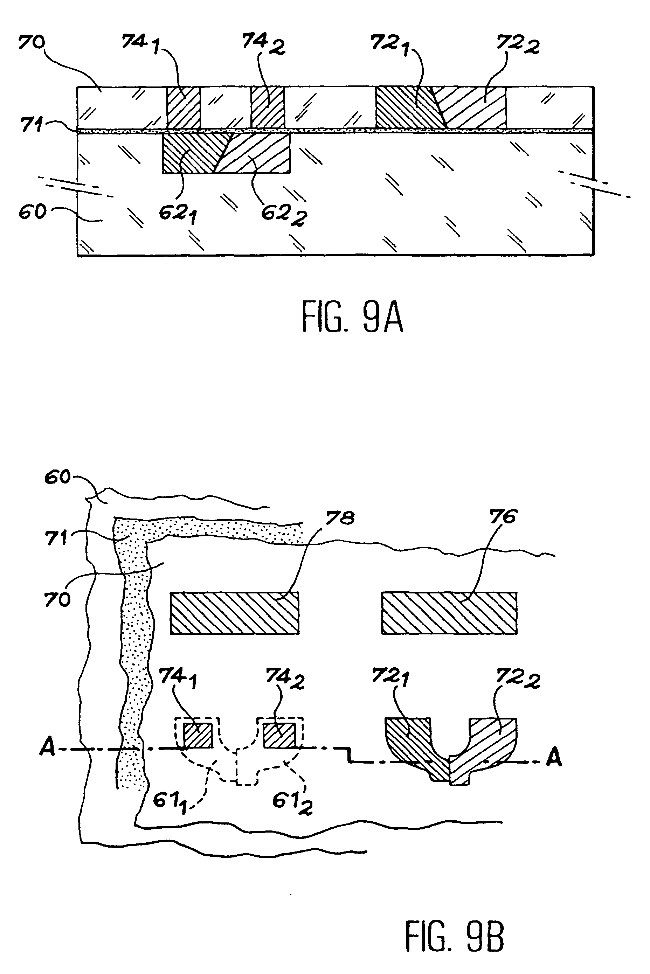

- les figures 9A et 9B montrent, en section droite et en vue de dessus, un ensemble à deux têtes avant réalisation des bobinages conducteurs et avant fermeture du circuit magnétique ;

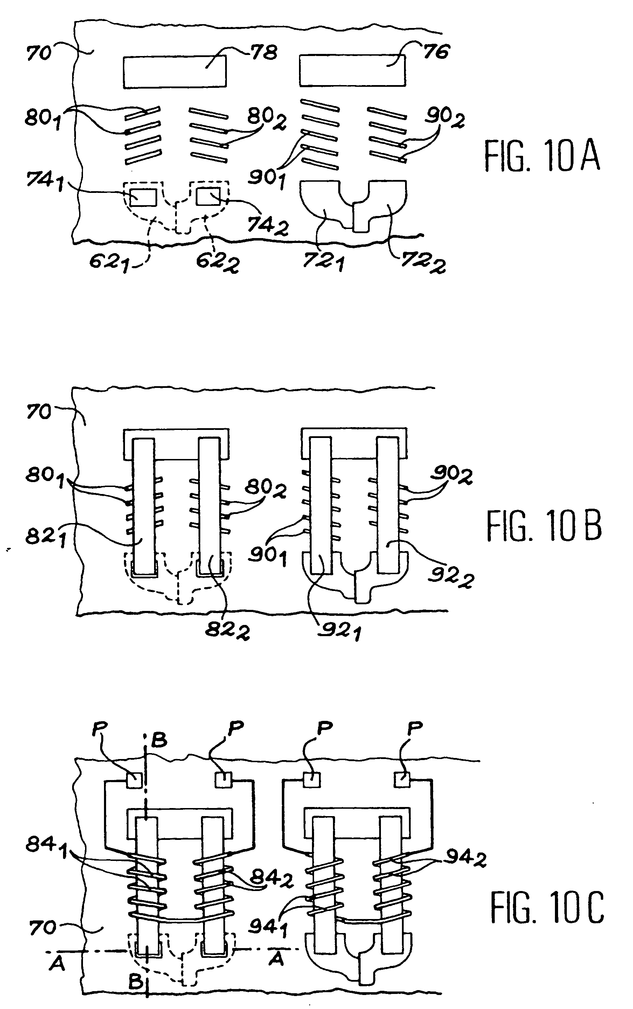

- les figures 10A, 10B, 10C illustrent, en vue de dessus, trois étapes dans la réalisation des bobinages conducteurs et la fermeture des circuits magnétiques ;

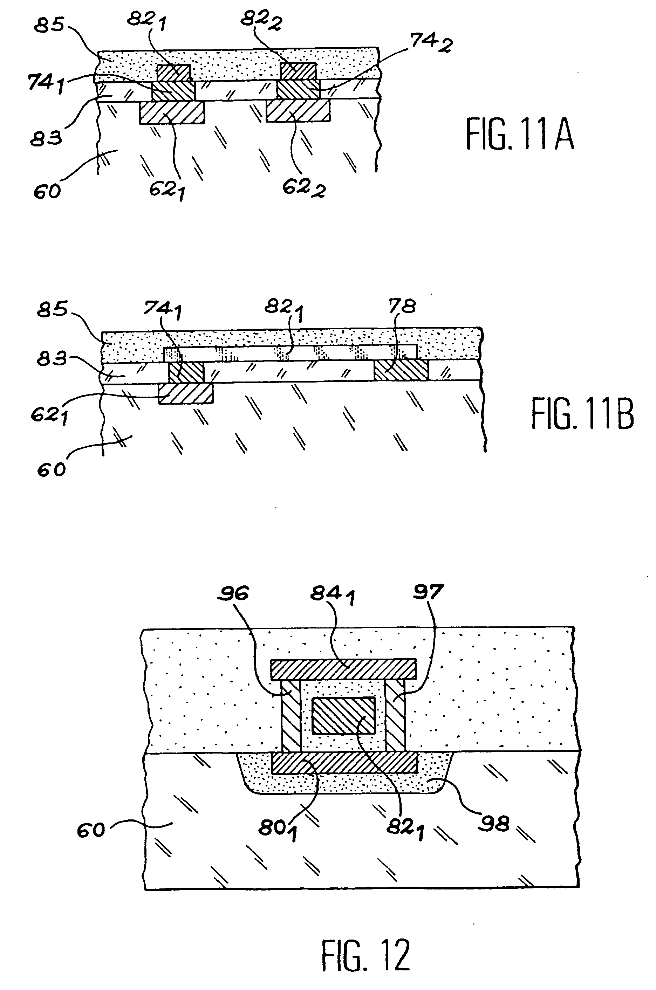

- les figures 11A et 11B sont des coupes au niveau des plots de raccordement magnétique ;
- la figure 12 est une coupe au niveau des plots de raccordement électrique ;

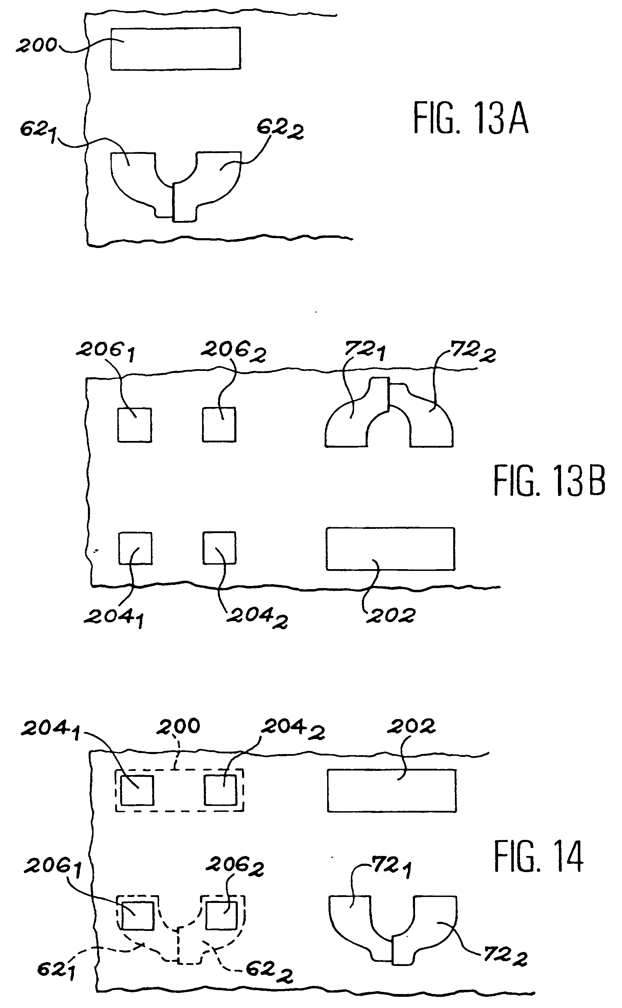

- les figures 13A et 13B illustrent, en vue de dessus, une variante d'un premier et d'un deuxième sous-ensembles à quatre plots de raccordement magnétique ;
- la figure 14 montre l'ensemble correspondant ;

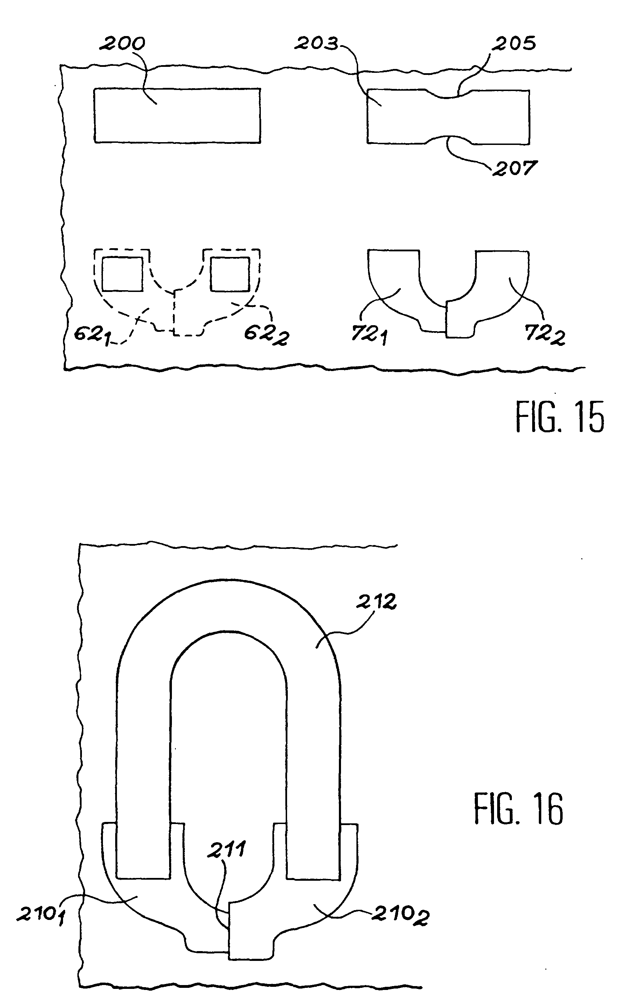

- la figure 15 illustre un mode de réalisation dans lequel l'une des pièces magnétiques arrière présente un rétreint central ;
- la figure 16 montre un mode particulier de fermeture du circuit magnétique à l'aide d'une seule pièce magnétique en forme de fer à cheval ;

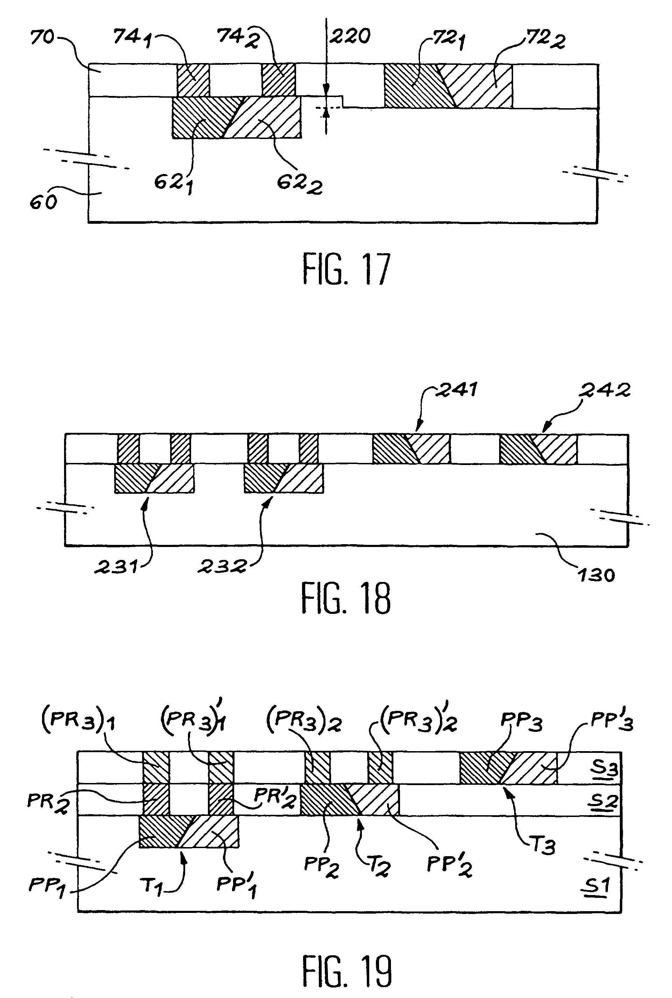

- la figure 17 illustre une variante dans laquelle les deux substrats sont légèrement encastrés pour créer un recouvrement des têtes magnétiques ;

- la figure 18 montre, en coupe, un ensemble à quatre têtes magnétiques et à deux azimuts opposés ;
- la figure 19 illustre une généralisation du procédé dans le cas de trois substrats et de trois sous-ensembles, pour obtenir un ensemble à trois têtes magnétiques.

**Exposé détaillé de modes de réalisation**

On voit, sur la figure 7A, en section droite et sur la figure 7B, en vue de dessus, un premier substrat 60, par exemple en silicium, et deux premières pièces polaires $62_1$, $62_2$ séparées par un entrefer 63. Cet entrefer est supposé présenter un azimut. La section droite de la figure 7A correspond à la ligne AA en trait interrompu marquée sur la figure 7B.

On voit, par ailleurs, sur la figure 8A, en section droite, et sur la figure 8B, en vue de dessus, un deuxième substrat 70, par exemple en silicium, avec des deuxièmes pièces polaires $72_1$, $72_2$ séparées par un deuxième entrefer azimuté 73, avec deux plots de raccordement magnétique $74_1$, $74_2$ réalisés en un matériau magnétique, ces plots étant disposés à côté des pièces polaires $72_1$, $72_2$, et deux pièces magnétiques arrière 76 et 78. La section droite de la figure 8A correspond à la ligne BB en trait interrompu marquée sur la figure 8B, ligne qui passe par les plots de raccordement $74_1$, $74_2$.

On retourne l'un des deux substrats, par exemple le second. Ce retournement peut s'effectuer dans le sens avant-arrière ou dans le sens droite-gauche. Le retournement effectué, on vient plaquer les deux substrats l'un sur l'autre. On les positionne l'un par rapport à l'autre, par exemple en ayant pris soin d'effectuer, au préalable, des lithographies double face pour aligner les faces arrière, ou directement par visée infrarouge. On assemble les deux substrats ainsi alignés, par exemple par une colle, une soudure anodique (en anglais "anodic bonding") ou un soudage moléculaire (en anglais "direct bonding").

L'opération suivante consiste à amincir le deuxième substrat 70 par l'arrière, jusqu'à faire apparaître les deuxièmes pièces polaires $72_1$, $72_2$, les plots de raccordement magnétique $74_1$, $74_2$ et les pièces magnétiques arrière 76, 78. Cet amincissement peut se faire par rectification, polissage ou encore par implantation puis clivage, etc... Comme indiqué plus haut, on pourrait aussi laisser subsister une mince couche isolante.

On obtient alors l'ensemble illustré sur les figures 9A (en section droite) et 9B (en vue de dessus). La coupe correspond à une ligne AA passant par les plots de contact et les deuxièmes pièces polaires. On voit, sur ces figures, que les plots de raccordement magnétique $74_1$, $74_2$ doivent être disposés, sur le deuxième substrat 70, de telle sorte qu'ils viennent au contact des premières pièces polaires $62_1$, $62_2$ du premier sous-ensemble lorsque les deux substrats sont plaqués l'un sur l'autre.

On voit également sur la figure 9A une couche isolante optionnelle 71 qui sépare les deux substrats pour réduire les courants de Foucault, les contacts magnétiques des différents éléments magnétiques étant assurés alors à travers la couche 71.

Il reste alors à terminer les deux circuits magnétiques et à réaliser les bobinages conducteurs. Ces opérations s'effectuent sur l'ensemble constitué après plaquage l'un sur l'autre des deux substrats, et non pas, comme dans l'art antérieur, avant plaquage.

Bien des solutions sont possibles pour ces opérations. Les figures 10A, 10B, 10C en illustrent une parmi d'autres :

- conformément à la figure 10A, on commence par former sur ou dans le deuxième substrat aminci 70 deux premières nappes inférieures de conducteurs 801, 802 à l'arrière des plots de raccordement $74_1$, $74_2$ et deux deuxièmes nappes inférieures de conducteurs $90_1$, $90_2$ à l'arrière des secondes pièces polaires $72_1$, $72_2$ ;
- conformément à la figure 10B, on forme ensuite sur le deuxième substrat 70 des premières jambes magnétiques de fermeture $82_1$, $82_2$ reliant l'un des plots de raccordement magnétique $74_1$ à l'autre $74_2$ via la pièce magnétique arrière 78, ces jambes chevauchant les premières nappes inférieures de conducteurs $80_1$, $80_2$ ; on forme encore deux deuxièmes jambes magnétiques de fermeture $92_1$, $92_2$ reliant l'une des deuxièmes pièces polaires $72_1$ à l'autre $72_2$ via la pièce magnétique arrière 76 ; ces deuxièmes jambes chevauchent les deuxièmes nappes inférieures de conducteurs $90_1$, $90_2$ ;
- conformément à la figure 10C, on forme ensuite les plots de contact P et deux premières nappes supérieures de conducteurs $84_1$, $84_2$ au-dessus des premières nappes inférieures de conducteurs $80_1$, $80_2$ et une deuxième nappe supérieure de conducteurs $94_1$, $94_2$ au-dessus des deuxièmes nappes inférieures de conducteurs ; les premières nappes inférieures $80_1$, $80_2$ et supérieures $90_1$, $90_2$ sont électriquement connectées entre elles et forment un premier bobinage tandis que les deuxièmes nappes inférieures $90_1$, $90_2$ et les deuxièmes nappes supérieures $94_1$, $94_2$ sont électriquement connectées entre elles et forment un deuxième bobinage.

Pour effectuer ces raccordements électriques entre conducteurs de nappes différentes, on peut former des plots de raccordement électrique aux extrémités des conducteurs des nappes inférieures de telle sorte que les conducteurs des nappes supérieures viennent au contact de ces plots. Ces plots de raccordement électrique peuvent être réalisés avant la formation des jambes magnétiques $82_1$, $82_2$, $92_1$, $92_2$ ou après.

Les figures 11 et 12 illustrent, en coupe, les raccordements magnétique et électrique. Sur la figure 11, tout d'abord, on voit les pièces en coupe au niveau des plots de raccordement magnétique. Ces plots $74_1$,

$74_2$ relient les pièces polaires $62_1$, $62_2$ aux jambes magnétiques $82_1$, $82_2$. Des couches isolantes 83 et 85, par exemple en $SiO_2$, isolent ces pièces. Une couche supplémentaire recouvre éventuellement l'ensemble et sert de couche de protection.

Sur la figure 12, on voit les pièces en coupe avec des plots conducteurs de raccordement. Ces plots 96, 97 relient les conducteurs de la nappe inférieure $80_1$ et les conducteurs de la nappe supérieure $84_1$. Dans la variante illustrée, la nappe inférieure de conducteurs $80_1$ n'est pas simplement déposée sur le premier substrat 60 mais enterrée dans celui-ci. Pour cela, on a gravé des caissons dans le substrat, on a rempli ces caissons d'isolant 98, et on y a pratiqué des rainures qu'on a rempli de matériau conducteur.

Les figures 13A et 13B illustrent, en vue de dessus, un autre mode de réalisation des premier et deuxième sous-ensembles. Sur le premier substrat, on forme, en plus des premières pièces polaires $62_1$, $62_2$, une pièce magnétique arrière 200. Sur le deuxième substrat, on forme, en plus des deuxièmes pièces polaires $72_1$, $72_2$ et des plots de raccordement magnétique $204_1$, $204_2$, une pièce arrière magnétique 202 et des deuxièmes plots de raccordement magnétique $206_1$, $206_2$.

Après retournement du deuxième substrat et plaquage sur le premier (ou l'inverse), on obtient un ensemble qui est illustré sur la figure 14. Les premiers plots de raccordement $204_1$, $204_2$ continuent à venir en appui sur les premières pièces polaires $62_1$, $62_2$, tandis que les deuxièmes plots de raccordement $206_1$, $206_2$ prennent appui sur la pièce magnétique arrière 200 du premier substrat.

Il reste alors à fermer le premier circuit magnétique par deux jambes reliant les plots $204_1$ et $206_1$ et les plots $204_2$ et $206_2$. Pour fermer le second circuit magnétique, on forme deux jambes magnétiques entre les pièces polaires $72_1$, $72_2$ et les extrémités de la pièce arrière 202. Les bobinages peuvent être constitués en même temps, comme exposé à propos des figures 10A, 10B, 10C.

On comprend après cette description de quelques modes de réalisation que le premier circuit magnétique propre à la première tête magnétique n'est complété qu'après retournement du deuxième substrat et plaquage sur le premier, et ceci grâce aux plots de raccordement magnétique qui ramènent les éléments magnétiques du premier sous-ensemble (à savoir les premières pièces polaires et le cas échéant la pièce arrière de fermeture) au niveau de la surface supérieure du deuxième substrat une fois aminci. Quant au deuxième circuit magnétique propre à la deuxième tête magnétique, il peut être achevé en prenant directement appui sur les deuxièmes pièces polaires, sans qu'il y ait lieu de prévoir de plots de raccordement, puisque ces pièces polaires affleurent à la surface du deuxième substrat une fois aminci.

La présence de plots de raccordement dans le premier circuit magnétique et l'absence de tels plots dans le second pourraient amener quelques dissymétries dans les têtes. Pour compenser ces effets, on peut prévoir que la pièce arrière de fermeture du flux magnétique de la deuxième tête soit un peu différente de celle de la première. On voit ainsi, sur la figure 15, que la pièce arrière 203 présente deux rétreints 205 et 207 qui viennent équilibrer le second circuit magnétique par rapport au premier, lequel contient les deux plots $104_1$, $104_2$, et une pièce arrière droite 200.

Naturellement, l'invention qui vient d'être décrite ne se limite pas au cas où les circuits magnétiques sont refermés par des jambes parallélépipédiques et des pièces arrière. Toute pièce magnétique peut être utilisée qui permet de relier l'un des plots à l'autre ou l'une des pièces polaires à l'autre. A titre d'exemple, la figure 16 montre une pièce en fer à cheval 212, reliant directement la pièce polaire $210_1$ à la pièce polaire $210_2$. Cette pièce 212 est de préférence en matériau magnétique isotrope.

Dans les modes de réalisation qui viennent d'être décrits, les deux substrats ont des surfaces planes et les deux têtes magnétiques obtenues, une fois l'un des substrats plaqué sur l'autre, sont décalées l'une par rapport à l'autre sans qu'il y ait de recouvrement entre elles (recouvrement qui avait été noté r sur la figure 3). Mais un tel recouvrement peut être obtenu aisément en gravant une marche dans chaque substrat, comme illustré sur la figure 17. Le décrochement obtenu porte la référence 220.

On pourrait penser que, par cette gravure d'une marche, on retombe dans les travers de la technique antérieure, mais il n'en est rien. En effet, dans le procédé décrit dans le document FR-A-2 747 226 déjà cité, la marche gravée dans les substrats avait une hauteur supérieure à 10 µm, alors qu'ici il s'agit seulement de créer un léger décalage entre les plans des substrats, décalage n'excédant pas 2 µm environ. Du fait de sa très faible profondeur, cette gravure peut être maîtrisée avec précision (tolérance de quelques dixièmes de microns).

L'invention ne se limite pas à des ensembles à double tête, mais s'étend à tout ensemble comprenant un nombre quelconque de têtes. A titre d'exemple, la figure 18 montre un ensemble à quadruple têtes. L'ensemble 230 comprend deux têtes 231, 232 identiques, avec leurs pièces polaires à entrefer azimuté et leurs plots de raccordement magnétique et deux têtes 241, 242 avec leurs pièces polaires dont l'azimut est opposé à celui des têtes 241, 242.

Le procédé de l'invention ne se limite pas non plus à la mise en oeuvre de deux substrats mais peut en mettre en oeuvre trois, comme illustré sur la figure 19. Pour cela :

- sur un premier substrat S1, on forme au moins un premier sous-ensemble d'éléments magnétiques comprenant au moins deux premières pièces polaires PP1, PP1' séparées par un premier entrefer,

- sur un deuxième substrat S2, on forme au moins un deuxième sous-ensemble d'éléments magnétiques comprenant au moins deux deuxièmes pièces polaires PP2, PP2' séparées par un deuxième entrefer, et au moins deux premiers plots de raccordement magnétique PR2, PR2' réalisés en matériau magnétique et disposés à côté des deux dites deuxièmes pièces polaires PP2, PP2',

- sur un troisième substrat S3, on forme au moins un troisième sous-ensemble d'éléments magnétiques comprenant au moins deux troisièmes pièces polaires PP3, PP3' séparées par un troisième entrefer, des premiers plots de raccordement magnétique (PR3)1, (PR3)1' disposés à côté des troisièmes pièces polaires PP3, PP3' et deux deuxièmes plots de raccordement magnétique (PR3)2, (PR3)2' disposés entre les premiers plots de raccordement magnétique (PR3)1, (PR3)1' et les troisièmes pièces polaires PP3, PP3',

- on plaque le deuxième substrat S2 sur le premier S1 de telle sorte que les deux plots de raccordement magnétique PR2, PR2' du deuxième substrat S2 viennent au contact magnétique des deux premières pièces polaires PP1, PP1' du premier substrat S1,

- on amincit le deuxième substrat S2 jusqu'à faire apparaître ou presque faire apparaître lesdites deuxièmes pièces polaires PP2, PP2' et lesdits premiers plots de raccordement magnétique PR2, PR2',

- on plaque le troisième substrat S3 sur le deuxième substrat aminci S2 de telle sorte que les deux premiers plots de raccordement magnétique (PR3)1, (PR3)1' du troisième substrat S3 viennent au contact magnétique des deux plots de raccordement magnétique PR2, PR2' du deuxième substrat S2 et les deux deuxièmes plots de raccordement magnétiques (PR3)2), (PR3)2' viennent au contact magnétique avec les deuxièmes pièces polaires PP2, PP2' du deuxième substrat S2,

- on amincit le troisième substrat S3 jusqu'à faire apparaître ou presque faire apparaître les troisièmes pièces polaires PP3, PP3', les deux premiers plots de raccordement (PR3)1, (PR3)1' et les deuxièmes plots de raccordement (PR3)2, (PR3)2',

- on forme sur le troisième substrat ainsi aminci un premier circuit magnétique de fermeture reliant l'un des premiers plots de raccordement magnétique (PR3)1 à l'autre (PR3)1' et un premier moyen de lecture et/ou d'écriture, comme par exemple un premier bobinage conducteur magnétiquement couplé à ce premier circuit magnétique, on forme un deuxième circuit magnétique reliant l'un des deuxièmes plots de raccordement magnétique ((PR3)2) à l'autre ((PR3)2') et un deuxième moyen de lecture et/ou d'écriture, comme par exemple un deuxième bobinage conducteur magnétiquement couplé au deuxième circuit magnétique, et l'on forme un troisième circuit magnétique reliant l'une des troisièmes pièces polaires (PP3) à l'autre (PP3'), et un troisième moyen de lecture et/ou d'écriture, comme par exemple un troisième bobinage conducteur magnétiquement couplé à ce troisième circuit.

Par "contact magnétique", on entend un contact soit direct, soit indirect mais qui suffit à assurer la continuité magnétique.

On peut généraliser ce procédé à n substrats :

- sur un premier substrat, on forme au moins un premier sous-ensemble d'éléments magnétiques comprenant au moins deux premières pièces polaires séparées par un premier entrefer,
- sur un deuxième substrat, on forme au moins un deuxième sous-ensemble d'éléments magnétiques comprenant au moins deux deuxièmes pièces polaires séparées par un deuxième entrefer, et au moins deux premiers plots de raccordement magnétique réalisés en matériau magnétique et disposés à côté des deux dites deuxièmes pièces polaires,
- et ainsi de suite sur (n-1) substrats, avec n entier supérieur à 3,
- sur un $n^{ième}$ substrat, on forme au moins un $n^{ième}$ sous-ensemble d'éléments magnétiques comprenant au moins deux $n^{ièmes}$ pièces polaires séparées par un $n^{ième}$ entrefer, deux premiers plots de raccordement magnétique et deux deuxièmes plots de raccordement magnétique, deux $(n-1)^{ème}$ plots de raccordement magnétique,
- on plaque le deuxième substrat sur le premier de telle sorte que les deux plots de raccordement du deuxième substrat viennent au contact magnétique des deux premières pièces polaires du premier substrat,
- on amincit le deuxième substrat jusqu'à faire apparaître ou presque faire apparaître lesdites deuxièmes pièces polaires et lesdits premiers plots de raccordement magnétique,
- et ainsi de suite jusqu'au $n^{ième}$ substrat qu'on plaque sur le $(n-1)^{ème}$ substrat aminci, de telle sorte que les deux premiers plots de raccordement magnétique du $n^{ième}$ substrat viennent au contact magnétique des deux premiers plots de raccordement du $(n-1)^{ème}$ substrat, les deux deuxièmes plots de raccordement magnétique du $n^{ième}$ substrat venant prendre contact magnétique avec les deux deuxièmes plots de raccordement du $(n-1)^{ème}$ substrat, etc... les deux $(n-1)^{ème}$ plots de raccordement du $n^{ième}$ substrat venant au contact magnétique des deux pièces polaires du $(n-1)^{ème}$ substrat,
- on amincit le $n^{ième}$ substrat jusqu'à faire apparaître ou presque faire apparaître lesdites $n^{èmes}$ pièces polaires et lesdits premier, deuxième, $(n-1)^{ème}$ plots de raccordement magnétique,
- on forme sur le $n^{ième}$ substrat un premier circuit magnétique reliant l'un des premiers plots de raccordement magnétique à l'autre, et un premier moyen de lecture et/ou d'écriture comme, par exemple, un premier bobinage conducteur magnétiquement couplé avec ce premier circuit magnétique, on forme un deuxième circuit magnétique reliant l'un des deuxièmes plots de raccordement magnétique à l'autre et un deuxième moyen de lecture et/ou d'écriture comme, par exemple, un deuxième bobinage conducteur magnétiquement couplé à ce deuxième circuit magnétique, et ainsi de suite ... et l'on forme un $n^{ième}$ circuit magnétique reliant l'une des $n^{ièmes}$ pièces polaires à l'autre, et un $n^{ième}$ moyen de lecture et/ou d'écriture comme, par exemple, un $n^{ième}$ bobinage conducteur magnétiquement couplé à ce $n^{ième}$ circuit magnétique.

L'ensemble obtenu comprend alors n têtes magnétiques avec leurs n circuits magnétiques et leurs n moyens de lecture et/ou d'écriture, par exemple n bobinages conducteurs.

## Revendications

1. Procédé de réalisation d'un ensemble à plusieurs têtes magnétiques, **caractérisé en ce qu'**il comprend les opérations suivantes :

   - sur un premier substrat (60), on forme au moins un premier sous-ensemble comprenant chacun au moins deux premières pièces polaires ($62_1$, $62_2$) séparées par un premier entrefer (63),
   - sur un deuxième substrat (70), on forme au moins un deuxième sous-ensemble comprenant chacun au moins deux deuxièmes pièces polaires ($72_1$, $72_2$) séparées par un deuxième entrefer (73), et au moins deux plots de raccordement magnétique ($74_1$, $74_2$) réalisés en matériau magnétique, ces plots étant disposés à côté des deux dites deuxièmes pièces polaires ($72_1$, $72_2$),
   - on retourne l'un des substrats (60, 70) et on le plaque sur l'autre (70, 60) de telle sorte que les deux plots de raccordement magnétique ($74_1$, $74_2$) du deuxième substrat (70) viennent au contact ou presque au contact des deux premières pièces polaires ($62_1$, $62_2$) du premier substrat (60) de façon à assurer une continuité magnétique,
   - on amincit le deuxième substrat (70) jusqu'à faire apparaître ou presque faire apparaître lesdites deuxièmes pièces polaires ($72_1$, $72_2$) et lesdits plots de raccordement magnétique ($74_1$, $74_2$),
   - on forme sur ce deuxième substrat (70) ainsi aminci un premier circuit magnétique reliant les deux plots de raccordement magnétique ($74_1$, $74_2$) et un premier moyen de lecture et/ou d'écriture ($80_1$, $80_2$) magnétiquement couplé avec ce premier circuit, ainsi qu'un second circuit magnétique reliant les deux secondes pièces polaires ($72_1$, $72_2$) et un deuxième moyen de lecture et/ou d'écriture ($90_1$, $90_2$) magnétiquement couplé au deuxième circuit magnétique.

2. Procédé selon la revendication 1, dans lequel le premier moyen de lecture et/ou d'écriture est un premier bobinage conducteur ($80_1$, $80_2$) et le deuxième moyen de lecture et/ou d'écriture est un deuxième bobinage conducteur ($90_1$, $90_2$).

3. Procédé selon la revendication 2, dans lequel, pour former le premier et le deuxième circuits magnétiques ainsi que le premier et le deuxième bobinages conducteurs, on met en oeuvre les opérations suivantes :

- on forme sur ou dans le deuxième substrat aminci (70) au moins une première nappe inférieure de conducteurs ($80_1$, $80_2$) à l'arrière des plots de raccordement ($74_1$, $74_2$) et au moins une deuxième nappe inférieure de conducteurs ($90_1$, $90_2$) à l'arrière des secondes pièces polaires ($72_1$, $72_2$),
- on forme sur le deuxième substrat (70) un premier circuit magnétique de fermeture ($82_1$, $82_2$) reliant l'un des plots de raccordement magnétique ($74_1$) à l'autre ($74_2$), une partie de ce premier circuit magnétique ($82_1$, $82_2$) chevauchant la première nappe inférieure de conducteurs ($80_1$, $80_2$) et un deuxième circuit magnétique de fermeture ($92_1$, $92_2$) reliant l'une desdites deuxièmes pièces polaires ($72_1$) à l'autre ($72_2$), une partie de ce deuxième circuit magnétique ($92_1$, $92_2$) chevauchant la deuxième nappe inférieure de conducteurs ($90_1$, $90_2$),
- on forme au moins une première nappe supérieure de conducteurs ($84_1$, $84_2$) au-dessus de la première nappe inférieure de conducteurs ($80_1$, $80_2$) et au moins une deuxième nappe supérieure de conducteurs ($94_1$, $94_2$) au-dessus de la deuxième nappe inférieure de conducteurs ($90_1$, $90_2$), les premières nappes respectivement inférieure et supérieure ($80_1$, $80_2$) ($84_1$, $84_2$) étant électriquement connectées entre elles et formant un premier bobinage et les deuxièmes nappes respectivement inférieure et supérieure ($90_1$, $90_2$) ($94_1$, $94_2$) étant électriquement connectées entre elles et formant un deuxième bobinage.

4. Procédé selon la revendication 3, dans lequel on forme sur le deuxième substrat (70), en plus des deux deuxièmes pièces polaires ($72_1$, $72_2$) et des deux premiers plots de raccordement magnétique ($74_1$, $74_2$) :

- une première pièce magnétique arrière (78) disposée à l'arrière des premiers plots de raccordement ($74_1$, $74_2$),
- une deuxième pièce magnétique arrière (76) disposée à l'arrière des secondes pièces polaires ($72_1$, $72_2$),
- pour former le premier circuit magnétique de fermeture, on forme deux premières jambes magnétiques ($82_1$, $82_2$) reliant la première pièce magnétique arrière (78) aux deux plots de raccordement ($74_1$, $74_2$),
- pour former le deuxième circuit magnétique de fermeture, on forme deux deuxièmes jambes magnétiques ($92_1$, $92_2$) reliant la deuxième pièce magnétique arrière (76) aux deux deuxièmes pièces polaires ($72_1$, $72_2$).

5. Procédé selon la revendication 2, dans lequel pour former le premier circuit magnétique, on dépose sur ou dans le deuxième substrat (70) une pièce magnétique (212) en forme de fer à cheval qui relie l'un des premiers plots à l'autre.

6. Procédé selon la revendication 2, dans lequel pour former le deuxième circuit magnétique, on dépose sur ou dans le deuxième substrat (70) une pièce magnétique (212) en forme de fer à cheval qui relie l'une des deuxièmes pièces polaires ($210_1$) à l'autre ($210_2$).

7. Procédé selon la revendication 2, dans lequel :

- sur le premier substrat (60), on forme au moins un premier sous-ensemble comprenant, en plus desdites premières pièces polaires ($62_1$, $62_2$), une première pièce magnétique arrière (200) disposée à l'arrière des premières pièces polaires ($62_1$, $62_2$),
- sur le deuxième substrat (70), on forme au moins un second sous-ensemble comprenant en plus desdites deuxièmes pièces polaires ($72_1$, $72_2$), desdits deux premiers plots de raccordement magnétique ($204_1$, $204_2$), une deuxième pièce magnétique arrière (202) disposée à l'arrière des deuxièmes pièces polaires ($72_1$, $72_2$) et deux deuxièmes plots de raccordement magnétique ($206_1$, $206_2$) réalisés en matériau magnétique, ces deux deuxièmes plots de raccordement ($206_1$, $206_2$) étant disposés à l'arrière des deux premiers plots de raccordement ($204_1$, $204_2$) et venant en contact ou presque en contact avec ladite première pièce magnétique arrière (200) du premier substrat (60) lorsque les deux substrats (60, 70) sont plaqués l'un sur l'autre,

- pour former le premier circuit magnétique de fermeture, on forme deux premières jambes magnétiques reliant les deux premiers plot de raccordement ($204_1$, $204_2$) aux deux deuxièmes plots de raccordement ($206_1$, $206_2$),

- pour former le deuxième circuit magnétique de fermeture, on forme deux deuxièmes jambes magnétiques reliant la deuxième pièce magnétique arrière (202) aux deux deuxièmes pièces polaires ($72_1$, $72_2$).

8. Procédé selon l'une quelconque des revendications 3 et 4, dans lequel :

- on forme une première nappe inférieure de conducteurs avec deux premières sous-nappes identiques ($80_1$, $80_2$), les deux premières jambes magnétiques ($82_1$, $82_2$) passant respectivement au-dessus de ces deux premières sous-nappes,

- dans lequel on forme une deuxième nappe inférieure de conducteurs avec deux deuxièmes sous-nappes identiques ($90_1$, $90_2$), les deux deuxièmes jambes magnétiques ($92_1$, $92_2$) passant respectivement au-dessus de ces deux deuxièmes sous-nappes,

- on forme une première nappe supérieure de conducteurs avec deux premières sur-nappes identiques ($84_1$, $84_2$) disposées au-dessus des premières sous-nappes ($80_1$, $80_2$) et une deuxième nappe supérieure de conducteurs avec deux deuxièmes sur-nappes identiques ($94_1$, $94_2$) disposées au-dessus des deuxièmes sous-nappes ($90_1$, $90_2$).

9. Procédé selon la revendication 8, dans lequel, après avoir formé la première et la deuxième nappes inférieures de conducteurs ($80_1$, $80_2$) ($90_1$, $90_2$), on forme des plots de raccordement électrique (96, 97) sur les conducteurs et on forme ensuite les premières et deuxièmes jambes magnétiques ($82_1$, $82_2$) ($92_1$, $92_2$).

10. Procédé selon la revendication 8, dans lequel après avoir formé les premières et deuxièmes jambes magnétiques ($82_1$, $82_2$) ($92_1$, $92_2$), on forme des plots de raccordement électrique (96, 97) sur les conducteurs de la nappe inférieure ($80_1$, $80_2$) ($90_1$, $90_2$).

11. Procédé selon la revendication 1, dans lequel on forme, sur le premier substrat (60), un seul premier sous-ensemble.

12. Procédé selon la revendication 1, dans lequel on forme, sur le premier substrat (60), deux premiers sous-ensembles (131, 132).

13. Procédé selon la revendication 1, dans lequel on forme, sur le deuxième substrat (70), un seul deuxième sous-ensemble.

14. Procédé selon la revendication 1, dans lequel on forme, sur le deuxième substrat (70) deux deuxièmes sous-ensembles (141, 142).

15. Procédé selon les revendication 11 et 13, dans lequel on forme sur le premier substrat (60) un seul premier sous-ensemble et, sur le deuxième substrat (70), un seul deuxième sous-ensemble, l'ensemble obtenu étant à double têtes.

16. Procédé selon la revendication 15, dans lequel les premières pièces polaires ($62_1$, $62_2$) du premier substrat (60) définissent un premier entrefer (63) ayant un premier azimut et les deuxièmes pièces polaires ($72_1$, $72_2$) du deuxième substrat (70) définissent un deuxième entrefer (73) ayant un deuxième azimut.

17. Procédé selon la revendication 16, dans lequel le premier azimut est opposé au second.

18. Procédé selon les revendications 12 et 14, dans lequel on forme, sur le premier substrat (60), deux premiers sous-ensembles (231, 232) et, sur le deuxième substrat (70), deux deuxièmes sous-ensembles (241, 242), l'ensemble obtenu (230) étant à quadruple têtes.

19. Procédé selon la revendication 18, dans lequel on forme deux premiers sous-ensembles (231, 232) présentant deux premiers entrefers ayant un même premier azimut et deux deuxièmes sous-ensembles (241, 242) présentant deux deuxièmes entrefers ayant un même second azimut.

20. Procédé selon la revendication 19, dans lequel le premier azimut commun aux deux premiers sous-ensembles (231, 232) est opposé au second azimut commun aux deux seconds sous-ensembles (241, 242).

21. Procédé selon l'une quelconque des revendications 1 à 20, dans lequel on grave une première marche dans le premier substrat (60) à côté des premières têtes magnétiques (621, 622), et on grave une deuxième marche identique à la première dans le deuxième substrat (70) au niveau des deux plots de raccordement magnétiques ($74_1$, $74_2$), de telle sorte que la partie du deuxième substrat (70) contenant les deux deuxièmes pièces polaires ($72_1$, $72_2$) vienne s'encastrer dans la première marche, et la partie du premier substrat contenant les premières pièces polaires ($62_1$, $62_2$) viennent s'encastrer dans la deuxième marche.

**22.** Procédé de réalisation d'un ensemble à multiple têtes magnétiques, **caractérisé en ce qu'**il comprend les opérations suivantes :

- sur un premier substrat (S1), on forme au moins un premier sous-ensemble d'éléments magnétiques comprenant au moins deux premières pièces polaires (PP1, PP1') séparées par un premier entrefer,
- sur un deuxième substrat (S2), on forme au moins un deuxième sous-ensemble d'éléments magnétiques comprenant au moins deux deuxièmes pièces polaires (PP2, PP2') séparées par un deuxième entrefer, et au moins deux premiers plots de raccordement magnétique (PR2, PR2') réalisés en matériau magnétique et disposés à côté des deux dites deuxièmes pièces polaires (PP2, PP2'),
- sur un troisième substrat (S3), on forme au moins un troisième sous-ensemble d'éléments magnétiques comprenant au moins deux troisièmes pièces polaires (PP3, PP3') séparées par un troisième entrefer, des premiers plots de raccordement magnétique ((PR3)1, (PR3)1') disposés à côté desdites troisièmes pièces polaires (PP3, PP3') et deux deuxièmes plots de raccordement magnétique ((PR3)2, (PR3)2') disposés entre lesdits premiers plots de raccordement magnétique ((PR3)1, (PR3)1') et les troisièmes pièces polaires (PP3, PP3'),
- on plaque le deuxième substrat (S2) sur le premier (S1) de telle sorte que les deux plots de raccordement magnétique (PR2, PR2') du deuxième substrat (S2) viennent au contact ou presque au contact des deux premières pièces polaires (PP1, PP1') du premier substrat (S1), de façon à assurer une continuité magnétique,
- on amincit le deuxième substrat (S3) jusqu'à faire apparaître ou à faire presque apparaître lesdites deuxièmes pièces polaires (PP2, PP2') et lesdits premiers plots de raccordement magnétique (PR2, PR2'),
- on plaque le troisième substrat (S3) sur le deuxième substrat aminci (S2) de telle sorte que les deux premiers plots de raccordement magnétique ((PR3)1, (PR3)1') du troisième substrat (S3) viennent au contact ou presque au contact des deux plots de raccordement magnétique (PR2, PR2') du deuxième substrat (S2) et les deux deuxièmes plots de raccordement magnétique ((PR3)2, (PR3)2') viennent au contact ou presque au contact des deuxièmes pièces polaires (PP2, PP2') du deuxième substrat (S2),
- on amincit le troisième substrat (S3) jusqu'à faire apparaître ou faire presque apparaître les troisièmes pièces polaires (PP3, PP3'), les deux premiers plots de raccordement ((PR3)1, (PR3)1') et les deux deuxièmes plots de raccordement ((PR3)2, (PR3)2'),
- on forme sur le troisième substrat ainsi aminci (S3) un premier circuit magnétique de fermeture reliant l'un des premiers plots de raccordement magnétique ((PR3)1) à l'autre (PR3)1') avec un premier moyen de lecture et/ou d'écriture magnétiquement couplé à ce premier circuit magnétique, on forme un deuxième circuit magnétique reliant l'un des deuxièmes plots de raccordement magnétique ((PR3)2) à l'autre ((PR3)2') avec un deuxième moyen de lecture et/ou d'écriture magnétiquement couplé au deuxième circuit magnétique, on forme un troisième circuit magnétique reliant l'une des troisièmes pièces polaires (PP3) à l'autre (PP3'), et un troisième moyen de lecture et/ou d'écriture magnétiquement couplé à ce troisième circuit.

**23.** Procédé de réalisation d'un ensemble à multiple têtes magnétiques, **caractérisé en ce qu'**il comprend les opérations suivantes :

- sur un premier substrat (S1), on forme au moins un premier sous-ensemble d'éléments magnétiques comprenant au moins deux premières pièces polaires séparées par un premier entrefer,
- sur un deuxième substrat, on forme au moins un deuxième sous-ensemble d'éléments magnétiques comprenant au moins deux deuxièmes pièces polaires séparées par un deuxième entrefer, et au moins deux premiers plots de raccordement magnétique réalisés en matériau magnétique et disposés à côté des deux dites deuxièmes pièces polaires,
- et ainsi de suite sur (n-1) substrats, avec n entier supérieur à 3,
- sur un $n^{ième}$ substrat, on forme au moins un $n^{ième}$ sous-ensemble d'éléments magnétiques comprenant au moins deux $n^{ièmes}$ pièces polaires séparées par un $n^{ième}$ entrefer, deux premiers plots de raccordement magnétique, deux deuxièmes plots de raccordement magnétique, etc... deux $(n-1)^{ème}$ plots de raccordement magnétique,
- on plaque le deuxième substrat sur le premier de telle sorte que les deux plots de raccordement du deuxième substrat viennent au contact ou presque au contact des deux premières pièces polaires du premier substrat,
- on amincit le deuxième substrat jusqu'à faire apparaître ou presque faire apparaître lesdites deuxièmes pièces polaires et lesdits premiers plots de raccordement magnétique,
- et ainsi de suite jusqu'au $n^{ième}$ substrat qu'on plaque sur le $(n-1)^{ème}$ substrat aminci, de telle sorte que les deux premiers plots de raccordement magnétique du $n^{ième}$ substrat viennent au contact ou presque au contact des deux premiers plots de raccordement du $(n-1)^{ième}$ substrat, les deux deuxièmes plots de raccordement magnétique du $n^{ième}$ substrat venant au contact ou presque au contact des deux deuxièmes plots de raccordement du $(n-1)^{ième}$ substrat, etc... les deux $(n-1)^{ième}$ plots de raccordement du $n^{ième}$ substrat venant au contact ou presque au contact des deux pièces polaires du $(n-1)^{ième}$ substrat,

- on amincit le $n^{ième}$ substrat jusqu'à faire apparaître ou presque faire apparaître lesdites $n^{ièmes}$ pièces polaires et lesdits premier, deuxième, ... $(n-1)^{ième}$ plots de raccordement magnétique,
- on forme sur le $n^{ième}$ substrat un premier circuit magnétique reliant l'un des premiers plots de raccordement magnétique à l'autre et un premier moyen de lecture et/ou d'écriture magnétiquement couplé avec ce premier circuit magnétique, on forme un deuxième circuit magnétique reliant l'un des deuxièmes plots de raccordement magnétique à l'autre et un deuxième moyen de lecture et/ou d'écriture magnétiquement couplé à ce deuxième circuit magnétique, et ainsi de suite, ..., on forme un $n^{ième}$ circuit magnétique reliant l'une des $n^{ièmes}$ pièces polaires à l'autre et un $n^{ième}$ moyen de lecture et/ou d'écriture magnétiquement couplé à ce $n^{ième}$ circuit magnétique.

24. Ensemble à plusieurs têtes magnétiques obtenu par le procédé selon la revendication 1, comprenant :

- un premier substrat (60) avec au moins un premier sous-ensemble comprenant deux premières pièces polaires (621, 622) séparées par un premier entrefer (63),
- un deuxième substrat (70) avec au moins un deuxième sous-ensemble comprenant deux deuxièmes pièces polaires ($72_1$, $72_2$) séparées par un deuxième entrefer (73), et deux plots de raccordement magnétique ($74_1$, $74_2$), le deuxième substrat (70) étant plaqué sur le premier (60) de telle sorte que les deux plots de raccordement magnétique ($74_1$, $74_2$) soient en contact ou presque en contact respectivement avec les deux premières pièces polaires ($62_1$, $62_2$),
- sur le deuxième substrat (70), un premier circuit magnétique ($82_1$, 78 $82_2$) reliant les deux plots de raccordement magnétique ($74_1$, $74_2$), et un premier moyen de lecture et/ou d'écriture ($80_1$, $80_2$) ($84_1$, $84_2$) magnétiquement couplé à ce premier circuit, et un deuxième circuit magnétique ($92_1$, 76, $92_2$) reliant les deux deuxièmes pièces polaires ($72_1$, $72_2$) avec un deuxième moyen de lecture et/ou d'écriture ($90_1$, $90_2$) ($94_1$, $94_2$) magnétiquement couplé à ce deuxième circuit.

**Patentansprüche**

1. Verfahren zur Herstellung einer Anordnung mit mehreren Magnetköpfen, **dadurch gekennzeichnet, dass** es die folgenden Operationen umfasst:

- man bildet auf einem ersten Substrat (60) wenigstens eine erste Teilanordnung, jede wenigstens zwei durch einen ersten Spalt (63) getrennte erste Polstücke ($62_1$, $62_2$) umfassend,
- man bildet auf einem zweiten Substrat (70) wenigstens eine zweite Teilanordnung, jede wenigstens zwei durch einen zweiten Spalt (73) getrennte zweite Polstücke ($72_1$, $72_2$) und wenigstens zwei aus einem magnetischen Material realisierte magnetische Verbindungselemente ($74_1$, $74_2$) umfassend, wobei diese Elemente neben den genannten zweiten Polstükken ($72_1$, $72_2$) angeordnet sind,
- man dreht eines der Substrate (60, 70) um und bringt es auf dem anderen (70, 60) so an, dass die beiden magnetischen Verbindungselemente ($74_1$, $74_2$) des zweiten Substrats (70) Kontakt haben oder fast Kontakt haben mit den beiden ersten Polstükken ($62_1$, $62_2$) des ersten Substrats (60), um eine magnetische Kontinuität zu gewährleisten,
- man macht das zweite Substrat (70) solange dünner, bis die genannten zweiten Polstücke ($72_1$, $72_2$) und die genannten magnetischen Verbindungselemente ($74_1$, $74_2$) zum Vorschein kommen oder fast zum Vorschein kommen,
- man bildet auf diesem derart dünner gemachten zweiten Substrat (70) einen ersten magnetischen Kreis, der die beiden magnetischen Verbindungselemente ($74_1$, $74_2$) und eine mit diesem ersten Kreis magnetisch gekoppelte erste Lese- und/oder Schreibeinrichtung ($80_1$, $80_2$) verbindet, sowie einen zweiten magnetischen Kreis, der die beiden zweiten Polstücke ($72_1$, $72_2$) und eine mit dem zweiten magnetischen Kreis magnetisch gekoppelte zweite Lese- und/oder Schreibeinrichtung ($90_1$, $90_2$) verbindet.

2. Verfahren nach Anspruch 1, bei dem die erste Lese- und/oder Schreibeinrichtung eine erste leitfähige Wicklung ($80_1$, $80_2$) ist und die zweite Lese- und/oder Schreibeinrichtung eine zweite leitfähige Wicklung ($90_1$, $90_2$) ist.

3. Verfahren nach Anspruch 2, bei dem man zur Bildung des ersten und des zweiten magnetischen Kreises sowie der ersten und der zweiten Wicklung folgende Operationen ausführt:

- man bildet auf oder in dem zweiten dünner gemachten Substrat (70) wenigstens eine erste untere Lage Leiter ($80_1$, $80_2$) hinter den Verbindungselementen ($74_1$, $74_2$) und wenigstens eine zweite untere Lage Leiter ($90_1$, $90_2$) hinter den zweiten Polstücken ($72_1$, $72_2$),
- man bildet auf dem zweiten Substrat (70) einen ersten magnetischen Schließkreis ($82_1$, $82_2$), der das eine Verbindungselement ($74_1$) mit dem anderen ($74_2$) verbindet, wobei ein Teil dieses ersten magnetischen Kreises ($82_1$, $82_2$) die erste untere Lage Leiter ($80_1$, $80_2$) überdeckt, sowie einen zweiten magnetischen Schließkreis ($92_1$, $92_2$), der das eine der genannten zweiten Polstücke ($72_1$) mit dem anderen ($72_2$) verbindet, wobei ein Teil dieses zweiten magnetischen Kreises ($92_1$, $92_2$) die zweite untere Lage Leiter ($90_1$, $90_2$) überdeckt,
- man bildet wenigstens eine erste obere Lage Leiter ($84_1$, $84_2$) über der ersten unteren Lage Leiter ($80_1$, $80_2$) und wenigstens eine zweite obere Lage Leiter ($94_1$, $94_2$) über der zweiten unteren Lage Leiter ($90_1$, $90_2$), wobei die ersten jeweils unteren und oberen ($80_1$, $80_2$) ($84_1$, $84_2$) Lagen elektrisch miteinander verbunden sind und eine erste Wicklung bilden, und die zweiten jeweils unteren und oberen ($90_1$, $90_2$) ($94_1$, $94_2$) Lagen elektrisch miteinander verbunden sind und eine zweite Wicklung bilden.

4. Verfahren nach Anspruch 3, bei dem man auf dem zweiten Substrat (70) - zusätzlich zu den beiden zweiten Polstücken ($72_1$, $72_2$) und den beiden ersten magnetischen Verbindungselementen ($74_1$, $74_2$) -, bildet:

- ein erstes hinteres Magnetstück (78), angeordnet hinter den ersten Verbindungselementen ($74_1$, $74_2$),
- ein zweites hinteres Magnetstück (76), angeordnet hinter den zweiten Polstücken ($72_1$, $72_2$),
- zwei erste magnetische Schenkel ($82_1$, $82_2$), die das erste hintere Magnetstück (78) mit den beiden Verbindungselementen ($74_1$, $74_2$) verbinden, um den ersten magnetischen Schließkreis zu bilden,
- zwei zweite magnetische Schenkel ($92_1$, $92_2$), die das zweite hintere Magnetstück (76) mit den beiden Verbindungselementen ($72_1$, $72_2$) verbinden, um den zweiten magnetischen Schließkreis zu bilden.

5. Verfahren nach Anspruch 2, bei dem man zur Bildung des ersten magnetischen Kreises auf oder in dem Substrat ein hufeisenförmiges magnetisches Element (212) abscheidet, welches das eine Verbindungselement mit dem anderen verbindet.

6. Verfahren nach Anspruch 2, bei dem man zur Bildung des zweiten magnetischen Kreises auf oder in dem Substrat ein hufeisenförmiges magnetisches Element (212) abscheidet, welches das eine der zweiten Polstücke ($210_1$) mit dem anderen ($210_2$) verbindet.

7. Verfahren nach Anspruch 2, bei dem:

- man auf dem ersten Substrat (60) wenigstens eine erste Teilanordnung bildet, mit - zusätzlich zu den genannten ersten Polstücken ($62_1$, $62_2$) -, einem ersten hinteren Magnetstück (200), angeordnet hinter den ersten Polstücken ($62_1$, $62_2$),
- man auf dem zweiten Substrat (70) wenigstens eine zweite Teilanordnung bildet, mit
- zusätzlich zu den genannten zweiten Polstücken ($72_1$, $72_2$), den genannten beiden ersten magnetischen Verbindungselementen ($204_1$, $204_2$) -, einem zweiten hinteren Magnetstück (202), angeordnet hinter den zweiten Polstücken ($72_1$, $72_2$), sowie zwei zweite magnetische Verbindungselemente ($206_1$, $206_2$), realisiert aus magnetischem Material, wobei diese beiden zweiten magnetischen Verbindungselemente ($206_1$, $206_2$) hinten den beiden ersten magnetischen Verbindungselementen ($204_1$, $204_2$) angeordnet sind und Kontakt haben oder fast Kontakt haben mit dem genannten ersten hinteren Magnetstück (200) des ersten Substrats (60), wenn die beiden Substrate (60, 70) aufeinander angebracht sind,
- man zur Bildung des ersten magnetischen Schließkreises zwei erste magnetische Schenkel bildet, welche die beiden ersten magnetischen Verbindungselementen ($204_1$, $204_2$) mit den beiden zweiten magnetischen Verbindungselementen ($206_1$, $206_2$) verbinden,
- man zur Bildung des zweiten magnetischen Schließkreises zwei zweite magnetische Schenkel bildet, die das zweite hintere Magnetstück (202) mit den beiden zweiten Polstücken ($72_1$, $72_2$) verbinden.

8. Verfahren nach einem der Ansprüche 3 und 4, bei dem:

- man eine erste untere Lage Leiter mit zwei ersten identischen Unter-Lagen ($80_1$, $80_2$) bildet, wobei die beiden ersten magnetischen Schenkel ($82_1$, $82_2$) jeweils über diesen beiden ersten Unter-Lagen verlaufen,

- man eine zweite untere Lage Leiter mit zwei zweiten identischen Unter-Lagen ($90_1$, $90_2$) bildet, wobei die beiden zweiten magnetischen Schenkel ($92_1$, $92_2$) jeweils über diesen beiden zweiten Unter-Lagen verlaufen,
- man eine erste obere Lage Leiter mit zwei über den ersten Unter-Lagen ($80_1$, $80_2$) angeordneten identischen ersten Über-Lagen ($84_1$, $84_2$) und eine zweite obere Lage Leiter mit zwei über den zweiten Unter-Lagen ($90_1$, $90_2$) angeordneten identischen zweiten Über-Lagen ($94_1$, $94_2$) bildet.

9. Verfahren nach Anspruch 8, bei dem man nach der Bildung der ersten und zweiten unteren Leiterlagen ($80_1$, $80_2$) ($90_1$, $90_2$) elektrische Verbindungselemente (96, 97) auf den Leitern bildet, und anschließend die ersten und zweiten magnetischen Schenkel ($82_1$, $82_2$) ($92_1$, $92_2$) bildet.

10. Verfahren nach Anspruch 8, bei dem man nach der Bildung der ersten und zweiten magnetischen Schenkel ($82_1$, $82_2$) ($92_1$, $92_2$) elektrische Verbindungselemente (96, 97) auf den Leitern der unteren Lage ($80_1$, $80_2$) ($90_1$, $90_2$) bildet.

11. Verfahren nach Anspruch 1, bei dem man auf dem ersten Substrat (60) eine einzige erste Teilanordnung bildet.

12. Verfahren nach Anspruch 1, bei dem man auf dem ersten Substrat (60) zwei erste Teilanordnungen (131, 132) bildet.

13. Verfahren nach Anspruch 1, bei dem man auf dem zweiten Substrat (70) eine einzige zweite Teilanordnung bildet.

14. Verfahren nach Anspruch 1, bei dem man auf dem zweiten Substrat (70) zwei zweite Teilanordnungen (141, 142) bildet.

15. Verfahren nach den Ansprüchen 11 und 13, bei dem man auf dem ersten Substrat (60) eine einzige erste Teilanordnung und auf dem zweiten Substrat (70) eine einzige zweite Teilanordnung bildet, wobei man eine Doppelkopfanordnung erhält.

16. Verfahren nach Anspruch 15, bei dem die ersten Polstücke ($62_1$, $62_2$) des ersten Substrats (60) einen ersten Spalt mit einem ersten Azimut (63) definieren, und die zweiten Polstücke ($72_1$, $72_2$) des ersten Substrats (70) einen zweiten Spalt mit einem zweiten Azimut (73) definieren.

17. Verfahren nach Anspruch 16, bei dem das erste Azimut dem zweiten entgegengesetzt ist.

18. Verfahren nach den Ansprüchen 12 und 14, bei dem man auf dem ersten Substrat (60) zwei erste Teilanordnungen (231, 232) und auf dem zweiten Substrat (70) zwei zweite Teilanordnungen (241, 242) bildet, wobei die erhaltene Anordnung (230) ein Vierfachkopf ist.

19. Verfahren nach Anspruch 18, bei dem man zwei erste Teilanordnungen (231, 232) mit zwei ersten Spalten bildet, die ein erstes Azimut aufweisen, und zwei zweite Teilanordnungen (241, 242) mit zwei zweiten Spalten bildet, die ein zweites Azimut aufweisen.

20. Verfahren nach Anspruch 19, bei dem das den ersten beiden Teilanordnungen (231, 232) gemeinsame erste Azimut dem den beiden zweiten Teilanordnungen (241, 242) gemeinsamen zweiten Azimut entgegengesetzt ist.

21. Verfahren nach einem der Ansprüche 1 bis 20, bei dem man in das erste Substrat (60) neben den ersten Magnetköpfen ($62_1$, $62_2$) eine erste Stufe ätzt, und in das zweite Substrat (70) im Bereich der beiden magnetischen Verbindungselemente ($74_1$, $74_2$) eine der ersten Stufe genau entsprechende zweite Stufe ätzt, so dass der Teil des zweiten Substrats (70), der die beiden Polstücke ($72_1$, $72_2$) enthält, in die erste Stufe passt, und der Teil des ersten Substrats (60), der die beiden Polstücke ($62_1$, $62_2$) enthält, in die zweite Stufe passt.

22. Verfahren zur Realisierung einer Anordnung multipler Magnetköpfe, **dadurch gekennzeichnet, dass** es die folgenden Operationen umfasst:

- man bildet auf einem ersten Substrat (S1) wenigstens eine erste Teilanordnung magnetischer Elemente, wenigstens zwei durch einen ersten Spalt getrennte erste Polstücke (PP1, PP1') umfassend,
- man bildet auf einem zweiten Substrat (S2) wenigstens eine zweite Teilanordnung magnetischer Elemente, wenigstens zwei durch einen zweiten Spalt getrennte zweite Polstücke (PP2, PP2') umfassend, und wenigstens zwei magnetische Verbindungselemente (PR2, PR2'), realisiert aus magnetischem Material und neben den genannten zweiten Polstücken (PP2, PP2') angeordnet,
- man bildet auf einem dritten Substrat (S3) wenigstens eine dritte Teilanordnung magnetischer Elemente, wenigstens zwei durch einen dritten Spalt getrennte dritte Polstücke (PP3, PP3') umfassend, und erste magnetische Verbindungselemente ((PR3)1, (PR3)1'), angeordnet neben den genannten dritten Polstücken (PP3, PP3'), und zwei zweite magnetische Verbindungselemente ((PR3)2, (PR3)2'), angeordnet zwischen den genannten ersten magnetischen Verbindungselementen ((PR3)1, (PR3)1') und den genannten dritten Polstükken (PP3, PP3'),

- man bringt das zweite Substrat (S2) so auf dem ersten (S1) an, dass die beiden magnetischen Verbindungselemente (PR2, PR2') des zweiten Substrats (S2) Kontakt haben oder fast Kontakt haben mit den beiden ersten Polstücken (PP1, PP1') des ersten Substrats (S1), so dass eine magnetische Kontinuität gewährleistet ist,

- man macht das zweite Substrat (S2) solange dünner, bis die genannten zweiten Polstücke (PP2, PP2') und die genannten ersten magnetischen Verbindungselemente (PR2, PR2') zum Vorschein kommen oder fast zum Vorschein kommen,

- man bringt das dritte Substrat (S3) so auf dem dünner gemachten zweiten Substrat (S2) an, dass die beiden ersten magnetischen Verbindungselemente ((PR3)1, (PR3)1') des dritten Substrats (S3) Kontakt haben oder fast Kontakt haben mit den beiden magnetischen Verbindungselementen (PR2, PR2') des zweiten Substrats (S2), und die beiden zweiten magnetischen Verbindungselemente ((PR3)2, (PR3)2') Kontakt haben oder fast Kontakt haben mit den zweiten Polstücken (PP2, PP2') des zweiten Substrats (S2),

- man macht das dritte Substrat (S3) solange dünner, bis die dritten Polstücke (PP3, PP3'), die beiden ersten Verbindungselemente ((PR3)1, (PR3)1') und die beiden zweiten Verbindungselemente ((PR3)2, (PR3)2') zum Vorschein kommen oder fast zum Vorschein kommen,

- man bildet auf diesem derart dünner gemachten dritten Substrat (S3) einen das eine ((PR3)1) der ersten magnetischen Verbindungselemente mit dem anderen ((PR3)1') verbindenden ersten magnetischen Schließkreis mit einer mit diesem ersten magnetischen Kreis magnetisch gekoppelten ersten Lese- und/oder Schreibeinrichtung, man bildet einen das eine ((PR3)2) der zweiten magnetischen Verbindungselemente mit dem anderen ((PR3)2') verbindenden zweiten magnetischen Kreis mit einer mit diesem zweiten magnetischen Kreis magnetisch gekoppelte zweite Lese- und/oder Schreibeinrichtung, man bildet einen das eine (PP3) der dritten Polstücke mit dem anderen (PP3') verbindenden dritten magnetischen Kreis und eine mit diesem dritten Kreis magnetisch gekoppelte dritte Lese- und/oder Schreibeinrichtung.

**23.** Verfahren zur Realisierung einer Anordnung multipler Magnetköpfe, **dadurch gekennzeichnet, dass** es die folgenden Operationen umfasst:

- man bildet auf einem ersten Substrat (S1) wenigstens eine erste Teilanordnung magnetischer Elemente, wenigstens zwei durch einen ersten Spalt getrennte erste Polstücke umfassend,

- man bildet auf einem zweiten Substrat wenigstens eine zweite Teilanordnung magnetischer Elemente, wenigstens zwei durch einen zweiten Spalt getrennte zweite Polstücke umfassend, und wenigstens zwei magnetische Verbindungselemente, realisiert aus magnetischem Material und neben den genannten zweiten Polstücken angeordnet,

- usw. auf (n-1) Substraten, mit n ganzzahlig höher als 3,

- man bildet auf einem n-ten Substrat wenigstens eine n-te Teilanordnung magnetischer Elemente, wenigstens zwei durch einen n-ten Spalt getrennte n-te Polstücke umfassend, zwei erste magnetische Verbindungselemente, zwei zweite magnetische Verbindungselemente usw... und zwei (n-1)te magnetische Verbindungselemente umfassend,

- man bringt das zweite Substrat so auf dem ersten an, dass die beiden magnetischen Verbindungselemente des zweiten Substrats Kontakt haben oder fast Kontakt haben mit den beiden ersten Polstükken des ersten Substrats,

- man macht das zweite Substrat solange dünner, bis die genannten zweiten Polstücke und die genannten ersten magnetischen Verbindungselemente zum Vorschein kommen oder fast zum Vorschein kommen,

- usw. bis zum n-ten Substrat, das man so auf dem dünner gemachten (n-1)ten Substrat anbringt, dass die beiden ersten magnetischen Verbindungselemente des n-ten Substrats Kontakt haben oder fast Kontakt haben mit den beiden ersten magnetischen Verbindungselementen des (n-1)ten Substrats, die beiden zweiten magnetischen Verbindungselemente des n-ten Substrats Kontakt haben oder fast Kontakt haben mit den beiden zweiten Verbindungselementen des (n-1)ten Substrats usw... und die beiden (n-1)ten magnetischen Verbindungselemente des n-ten Substrats Kontakt haben oder fast Kontakt haben mit den beiden zweiten Polstücken des (n-1)ten Substrats,

- man macht das n-te Substrat solange dünner, bis die n-ten Polstücke und die genannten ersten, zweiten, ... (n-1)ten magnetischen Verbindungselemente zum Vorschein kommen oder fast zum Vorschein kommen,

- man bildet auf dem dritten Substrat einen das eine der ersten magnetischen Verbindungselemente mit dem anderen verbindenden ersten magnetischen Kreis und eine mit diesem ersten magnetischen Kreis magnetisch gekoppelte erste Lese- und/oder Schreibeinrichtung, man bildet einen das eine der zweiten magnetischen Verbindungselemente mit dem anderen verbindenden zweiten magnetischen Kreis und eine mit diesem zweiten magnetischen Kreis magnetisch gekoppelte zweite Lese- und/oder Schreibeinrichtung usw., ..., man bildet einen das eine der n-ten Polstücke mit dem anderen verbindenden n-ten magnetischen Kreis und eine mit diesem n-ten Kreis magnetisch gekoppelte n-te magnetische Lese- und/oder Schreibeinrichtung.

24. Anordnung mit mehreren Magnetköpfen, hergestellt gemäß dem Verfahren nach Anspruch 1, umfassend:

- ein erstes Substrat (60) mit wenigstens einer ersten Teilanordnung, zwei durch einen ersten Spalt (63) getrennte erste Polstücke ($62_1$, $62_2$) umfassend,
- ein zweites Substrat (70) mit wenigstens einer zweiten Teilanordnung, jede wenigstens zwei durch einen zweiten Spalt (73) getrennte zweite Polstükke ($72_1$, $72_2$) und wenigstens zwei aus einem magnetischen Material realisierte magnetische Verbindungselemente ($74_1$, $74_2$) umfassend, wobei das zweite Substrat (70) so auf dem ersten angebracht wird, dass die beiden magnetischen Verbindungselemente ($74_1$, $74_2$) Kontakt haben oder fast Kontakt haben mit den beiden ersten Polstücken ($62_1$, $62_2$),
- auf dem zweiten Substrat (70) einen ersten magnetischen Kreis ($82_1$, 78, $82_2$), der die beiden magnetischen Verbindungselemente ($74_1$, $74_2$) verbindet, und eine mit diesem ersten Kreis magnetisch gekoppelte erste Lese- und/oder Schreibeinrichtung ($80_1$, $80_2$) ($84_1$, $84_2$), und einen zweiten magnetischen Kreis ($92_1$, 76, $92_2$), der die beiden zweiten Polstücke ($72_1$, $72_2$) verbindet mit einer mit dem zweiten magnetischen Kreis magnetisch gekoppelten zweiten Lese- und/oder Schreibeinrichtung ($90_1$, $90_2$) ($94_1$, $94_2$).

## Claims

1. Process for the production of an assembly having several magnetic heads, **characterized in that** it comprises the following operations:

- on a first substrate (6) is formed at least one first subassembly, in each case comprising at least two first pole pieces ($62_1$, $62_2$) separated by a first gap (63),
- on a second substrate (70) is formed at least one second subassembly, comprising in each case at least two second pole pieces ($72_1$, $72_2$) separated by a second gap (73) and at least two magnetic connectors ($74_1$, $74_2$) made from a magnetic material, said connectors being placed alongside two of said second pole pieces ($72_1$, $72_2$),
- one of the substrates (60, 70) is reversed and engaged on the other (70, 60) in such a way that the two magnetic connectors ($74_1$, $74_2$) of the second substrate (7) come or almost come into contact with the two first pole pieces ($62_1$, $62_2$) of the first substrate (60) so as to ensure a magnetic continuity,
- the second substrate (70) is thinned out until said second pole pieces ($72_1$, $72_2$) and said magnetic connectors ($74_1$, $74_2$) appear or almost appear,
- on said second substrate (70) thinned out in this way is formed a first magnetic circuit connecting the two magnetic connectors ($74_1$, $74_2$) and a first reading and/or writing means ($80_1$, $80_2$) magnetically coupled to said first circuit, as well as a second magnetic circuit connecting the two second pole pieces ($72_1$, $72_2$) and a second reading and/or writing means ($90_1$, $90_2$) magnetically coupled to the second magnetic circuit.

2. Process according to claim 1, wherein the first reading and/or writing means is a first conductor coil ($80_1$, $80_2$) and the second reading and/or writing means is a second conductor coil ($90_1$, $90_2$).

3. Process according to claim 2, wherein, for forming the first and second magnetic circuits, as well as the first and second conductor coils, the following operations are performed:

- on or in the second, thinned out substrate (70) is formed at least one first, lower conductor layer ($80_1$, $80_2$) to the rear of the connectors ($74_1$, $74_2$) and at least one second, lower conductor layer ($90_1$, $90_2$) to the rear of the second pole pieces ($72_1$, $72_2$),
- on the second substrate (70) is formed a first magnetic closing circuit ($82_1$, $82_2$) connecting one of the magnetic connectors ($74_1$) to the other ($74_2$), part of said first magnetic circuit ($82_1$, $82_2$) overlapping the first, lower conductor layer ($80_1$, $80_2$) and second magnetic closing circuit ($92_1$, $92_2$) connecting one of said second pole pieces ($72_1$) to the other ($72_2$), a part of said second magnetic circuit ($92_1$, $92_2$) overlapping the second, lower conductor layer ($90_1$, $90_2$),
- at least one first, upper conductor layer ($84_1$,

$84_2$) is formed above the first, lower conductor layer ($80_1$, $80_2$) and at least one second, upper conductor layer ($94_1$, $94_2$) above the second, lower conductor layer ($90_1$, $90_2$), the first, respectively lower and upper layers ($80_1$, $80_2$, ($84_1$, $84_2$) being electrically interconnected and forming a first coil and the second, respectively lower and upper layers ($90_1$, $90_2$), ($94_1$, $94_2$) being electrically interconnected and forming a second coil.

4. Process according to claim 3, wherein on the second substrate (70) is formed in addition to the two second pole pieces ($72_1$, $72_2$) and the two first magnetic connectors ($74_1$, $74_2$):

   - a first, rear magnetic piece (78) positioned to the rear of the first connector ($74_1$, $74_2$),
   - a second, rear magnetic piece (76) positioned to the rear of the second pole pieces ($72_1$, $72_2$),
   - for forming the first magnetic closing circuit formation takes place of two first magnetic legs ($82_1$, $82_2$) connecting the first, rear magnetic piece (78) to the two connectors ($74_1$, $74_2$),
   - for forming the second magnetic closing circuit formation takes place of two second magnetic legs ($92_1$, $92_2$) connecting the second, magnetic piece (76) to the two second pole pieces ($72_1$, $72_2$).

5. Process according to claim 2, wherein, for forming the first magnetic circuit, on or in the second substrate (70) is deposited a horseshoe-shaped, magnetic piece (212) connecting one of the first elements to the other.

6. Process according to claim 2, wherein, for forming the second magnetic circuit, on or in the second substrate (70) is deposited a horseshoe-shaped magnetic piece (212) connecting one of the second pole pieces ($210_1$), to the other ($210_2$).

7. Process according to claim 2, wherein:

   - on the first substrate (60) is formed at least one first subassembly comprising, in addition to said first pole pieces ($62_1$, $62_2$), a first, rear magnetic piece (200) positioned to the rear of the first pole pieces ($62_1$, $62_2$),
   - on the second substrate (70) is formed at least one second subassembly comprising in addition to said second pole pieces ($72_1$, $72_2$), said two first magnetic connectors ($204_1$, $204_2$), a second, rear magnetic piece (202) positioned to the rear of the second pole pieces ($72_1$, $72_2$) and two second magnetic connectors ($206_1$, $206_2$) made from a magnetic material, said two second connectors ($206_1$, $206_2$) being positioned to the rear of the two first connectors ($204_1$, $204_2$) and coming or almost coming into contact with said first, rear magnetic piece (200) of the first substrate (60) when the two substrates (60, 70) are engaged on one another,
   - for forming the first magnetic closing circuit, formation takes place of two first magnetic legs connecting the two first connectors ($204_1$, $204_2$) to the two second connectors ($206_1$, $206_2$),
   - for forming the second magnetic closing circuit, formation takes place of two second magnetic legs connecting the second, rear magnetic piece (202) to the two second pole pieces ($72_1$, $72_2$).

8. Process according to either of the claims 3 and 4, wherein:

   - a first, lower conductor layer is formed with two first identical underlayers ($80_1$, $80_2$), the first two magnetic legs ($82_1$, $82_2$) respectively passing above said two first underlayers,
   - wherein formation takes place of a second, lower conductor layer with two second identical underlayers ($90_1$, $90_2$), the two second magnetic legs ($92_1$, $92_2$) respectively passing above said two second underlayers,
   - formation takes place of a first, upper conductor layer with two first, identical overlayers ($84_1$, $84_2$) positioned above the first underlayers ($80_1$, $80_2$) and a second, upper conductor layer with two second, identical overlayers ($94_1$, $94_2$) placed above the second underlayers ($90_1$, $90_2$).

9. Process according to claim 8, wherein, after forming the first and second lower conductor layers ($80_1$, $80_2$) ($90_1$, $90_2$), formation takes place of electrical connectors (96, 97) on the conductors, followed by the formation of the first and second magnetic legs ($82_1$, $82_2$) ($92_1$, $92_2$).

10. Process according to claim 8, wherein, after forming the first and second magnetic legs ($82_1$, $82_2$) ($92_1$, $92_2$), formation takes place of electrical connectors (96, 97) on the conductors of the lower layer ($80_1$, $80_2$) ($90_1$, $90_2$).

11. Process according to claim 1, wherein a single first subassembly is formed on the first substrate (60).

12. Process according to claim 1, wherein two first subassemblies (131, 132) are formed on the first substrate (60).

13. Process according to claim 1, wherein a single second subassembly is formed on the second substrate (70).

14. Process according to claim 1, wherein two second subassemblies (141, 142) are formed on the second substrate (70).

15. Process according to claims 11 and 13, wherein formation takes place on the first substrate (60) of a single first subassembly and, on the second substrate (70), of a single second subassembly, the assembly obtained being of the double head type.

16. Process according to claim 15, wherein the first two pole pieces ($62_1$, $62_2$) of the first substrate (60) define a first gap (63) having a first azimuth and the second pole pieces ($72_1$, $72_2$) of the second substrate (70) define a second gap (73) with a second azimuth.

17. Process according to claim 16, wherein the first azimuth is opposed to the second.

18. Process according to claims 12 and 14, wherein formation takes place on the first substrate (60) of two first subassemblies (231, 232) and, on the second substrate (70), two second subassemblies (241, 242), the assembly obtained (23) being of the quadruple head type.

19. Process according to claim 18, wherein formation takes place of two first subassemblies (231, 232) having two first gaps with the same first azimuth and two second subassemblies (241, 242) having two second gaps with the same second azimuth.

20. Process according to claim 19, wherein the first azimuth common to the two first subassemblies (231, 232) is opposite to the second azimuth common to the two second subassemblies (241, 242).

21. Process according to any one of the claims 1 to 20, wherein etching takes place of a first step in the first substrate (60) alongside first magnetic heads ($62_1$, $62_2$) and a second, identical step to the first is etched in the second substrate (70) level with the two magnetic connectors ($74_1$, $74_2$), in such a way that the portion of the second substrate (70) containing the two second pole pieces ($72_1$, $72_2$) is fitted into the first step, and the portion of the first substrate containing the first pole pieces ($62_1$, $62_2$) is fitted into the second step.

22. Process for producing a multiple magnetic head assembly, **characterized in that** it comprises the following operations:

    - on a first substrate (S1) is formed at least one first subassembly of magnetic elements comprising at least two first pole pieces (PP1, PP1') separated by a first gap,

    - on a second substrate (S2) is formed at least one second subassembly of magnetic elements comprising at least two second pole pieces (PP2, PP2') separated by a second gap, and at least two first magnetic connectors (PR2, PR2') made from a magnetic material and placed alongside the two said second pole pieces (PP2, PP2'),

    - on a third substrate (S3) is formed at least one third subassembly of magnetic elements comprising at least two third pole pieces (PP3, PP3') separated by a third gap, first magnetic connectors ((PR3)1, (PR3)1')) placed alongside said third pole pieces (PP3, PP3') and two second magnetic connectors ((PR3)2, (PR3)2')) placed between said first magnetic connectors ((PR3)1, (PR3)1')) and the third pole pieces (PP3, PP3'),

    - the second substrate (S2) is engaged on the first substrate (S1) in such a way that the two magnetic connectors (PR2, PR2') of the second substrate (S2) come into contact or almost into contact with the two first pole pieces (PP1, PP1') of the first substrate (S1), so as to ensure a magnetic continuity,

    - the second substrate (S3) is thinned out until said second pole pieces (PP2, PP2') and said first magnetic connectors (PR2, PR2') appear or almost appear,

    - the third substrate (S3) is engaged on the second, thinned out substrate (S2), so that the two first magnetic connectors ((PR3)1, (PR3)1') of the third substrate (S3) come into contact or almost into contact with the two magnetic connectors (PR2, PR2') of the second substrate (S2) and the two second magnetic connectors ((PR3)2, (PR3)2') come into contact or almost into contact with the second pole pieces (PP2, PP2') of the second substrate (S2),

    - the third substrate (S3) is thinned out until the third pole pieces (PP3, PP3'), the two first connectors ((PR3)1, (PR3)1') and the two second connectors ((PR3)2, (PR3)2') appear or almost appear,

    - on the thus thinned out, third substrate (S3) is formed a first magnetic closing circuit connecting one of the first magnetic connectors ((PR3)1) to the other ((PR3)1') with a first reading and/or writing means magnetically coupled to said first circuit, a second magnetic circuit is formed connecting one of the second magnetic connectors ((PR3)2) to the other ((PR3)2') with a second reading and/or writing means magnetically coupled to the second magnetic circuit, a third magnetic circuit is formed connecting one of the third pole pieces (PP3) to the other (PP3') and a third reading and/or writing means magnetically coupled to said third circuit.

**23.** Process for producing an assembly having multiple magnetic heads, **characterized in that** it comprises the following operations:

- on a first substrate (S1) is formed at least one first subassembly of magnetic elements comprising at least two first pole pieces separated by a first gap,
- on a second substrate is formed at least one second subassembly of magnetic elements comprising at least two second pole pieces separated by a second gap, and at least two first magnetic connectors made from a magnetic material and placed alongside two of said second pole pieces,
- and so on on (n-1) substrates, with n being an integer exceeding 3,
- on a nth substrate is formed at least one nth subassembly of magnetic elements comprising at least two nth pole pieces separated by a nth gap, two first magnetic connectors, two second magnetic connectors, etc., two (n-1)th magnetic connectors,
- the second substrate is engaged on the first, in such a way that the two connectors of the second substrate come into contact or almost into contact with the two first pole pieces of the first substrate,
- the second substrate is thinned out until said second pole pieces and said first magnetic connectors appear or almost appear,
- and so on up to the nth substrate, which is engaged on the (n-1)th thinned out substrate, in such a way that the two first magnetic connectors of the nth substrate come into contact or almost into contact with the two first connectors of the (n-1)th substrate, the two second magnetic connectors of the nth substrate coming into contact or almost into contact with the two second connectors of the (n-1)th substrate, etc., the two (n-1)th connectors of the nth substrate coming into contact or almost into contact with the two pole pieces of the (n-1)th substrate,
- the nth substrate is thinned out until said nth pole pieces and said first, second, ... (n-1)th magnetic connectors appear or almost appear,
- on the nth substrate is formed a first magnetic circuit connecting one of the first magnetic connectors to the other and a first reading and/or writing means coupled to said first magnetic circuit, a second magnetic circuit is formed connecting one of the second magnetic connectors to the other and a second reading and/or writing means magnetically coupled to said second magnetic circuit and so on, a nth magnetic circuit is formed connecting of the nth pole pieces to the other and a nth reading and/or writing means magnetically coupled to said nth magnetic circuit.

**24.** Assembly having several magnetic heads obtained by the process according to claim 1, comprising:

- a first substrate (60) with at least one first subassembly comprising two first pole pieces ($62_1$, $62_2$) separated by a first gap (63),
- a second substrate (70) with at least one second subassembly comprising two second pole pieces ($72_1$, $72_2$) separated by a second gap (73) and two magnetic connectors ($74_1$, $74_2$), the second substrate (70) being engaged on the first (60), in such a way that the two magnetic connectors ($74_1$, $74_2$) are in contact or almost in contact respectively with the two first pole pieces ($62_1$, $62_2$),
- on the second substrate (70), a first magnetic circuit ($82_1$, 78, $82_2$) connecting the two magnetic connectors ($74_1$, $74_2$), and a first reading and/or writing means ($80_1$, $80_2$) ($84_1$, $84_2$) magnetically coupled to said first circuit, and a second magnetic circuit ($92_1$, 76, $92_2$) connecting the two second pole pieces ($72_1$, $72_2$) with a second reading and/or writing means ($90_1$, $90_2$) ($94_1$, $94_2$) magnetically coupled to said second circuit.

FIG. 1

FIG. 2

FIG. 3

FIG. 4

FIG. 6

EP 0 951 010 B1

$62_1$    63    $62_2$    60

**FIG. 7A**

$62_1$      $62_2$

A —— —— A    **FIG. 7B**

60    63

$74_1$    $74_2$    $72_1$    73    $72_2$

70

**FIG. 8A**

70      $72_1$    73    $72_2$

B —— —— B

$74_1$      $74_2$

78      76

**FIG. 8B**

FIG. 9A

FIG. 9B

EP 0 951 010 B1

FIG. 10 A

FIG. 10 B

FIG. 10 C

23

FIG.11A

FIG.11B

FIG. 12

200

62₁    62₂

FIG. 13A

206₁    206₂    72₁    72₂

FIG. 13B

204₁    204₂    202

204₁    200    204₂    202

FIG. 14

206₁    206₂

72₁

62₁    62₂    72₂

FIG. 15

FIG. 16

EP 0 951 010 B1

FIG. 17

FIG. 18

FIG. 19

27